# EUROPÄISCHE PATENTSCHRIFT

(11) **EP 1 981 662 B1**
(45) Veröffentlichungstag und Bekanntmachung des Hinweises auf die Patenterteilung: **11.11.2009**
(21) Anmeldenummer: 07701276.3
(22) Anmeldetag: 24.01.2007
(51) Int. Cl.: B21D 15/06, B21C 37/20, B62D 1/19

(54) **IN FORM EINES WELLROHRS AUSGEBILDETES DEFORMIERBARES ELEMENT EINER LENKSPINDEL UND VERFAHREN ZU DESSEN HERSTELLUNG**
DEFORMABLE ELEMENT, DESIGNED IN THE FORM OF A CORRUGATED TUBE, OF A STEERING WHEEL SPINDLE AND METHOD OF PRODUCING IT
ELEMENT DEFORMABLE EN FORME DE TUBE ONDULE POUR COLONNE DE DIRECTION ET PROCEDE POUR SA FABRICATION

(30) Priorität: 07.02.2006 DE 102006005736
(43) Veröffentlichungstag der Anmeldung: 22.10.2008
(73) Patentinhaber: ThyssenKrupp Presta Aktiengesellschaft, 9492 Eschen (LI)
(72) Erfinder: LUTZ, Christian, 6714 Nüziders (AT)
(74) Vertreter: Hofmann, Ralf U.
(86) Internationale Anmeldenummer: PCT/AT2007/000029
(87) Internationale Veröffentlichungsnummer: WO 2007/090213

(56) Entgegenhaltungen:
- EP-A2- 1 344 708
- GB-A- 961 188
- US-A- 999 390
- US-A- 3 461 531
- US-A- 3 577 621
- US-A- 5 243 842

## Beschreibung

Die Erfindung betrifft ein Verfahren zur Herstellung eines in Form eines Wellrohrs ausgebildeten deformierbaren Elements einer Lenkspindel für ein Kraftfahrzeug, wobei das Wellrohr mit Öffnungen versehen ist, die die Wand des Wellrohrs durchsetzen.

Herkömmlicherweise werden in Form von Wellrohren ausgebildete deformierbare Abschnitte von Lenkspindeln aus zunächst zylindrischen Rohren hergestellt. Beispielsweise ist in der EP 782 801 B1 ein derartiges Verfahren beschrieben, wobei zunächst eine Vorwellung in das Rohr eingeprägt wird und das Rohr in der Folge mittels Pressbacken, die achsial zusammengedrückt werden, unter Auffaltung der Vorwellung achsial komprimiert wird. Ein weiteres derartiges Verfahren zur Herstellung eines Wellrohrs ist beispielsweise aus der EP 0 661 117 A1 bekannt.

Ein weiteres in Form eines Wellrohrs ausgebildetes deformierbares Element einer Lenkspindel für ein Kraftfahrzeug ist aus der EP 1 344 708 A2 bekannt. Dieses, mehrschichtig ausgebildete, Wellrohr besitzt im Bereich seiner Wellenberge Öffnungen. Es kann hierdurch bei einer ausreichenden Festigkeit gegenüber einem um die Längsachse des Wellrohrs wirkenden Drehmoment eine verbesserte Verformbarkeit im Crash-Fall erreicht werden.

Aus der US 999,390 A ist weiters ein Rohr bekannt, welches zur Führung eines flüssigen oder gasförmigen Mediums dient, insbesondere als Abzugskanal. Das Rohr weist eine gewellte Ausbildung auf und besteht aus zwei miteinander verbundenen Halbschalen. Weitere zum Führen eines Mediums dienende Rohre sind aus der DE 200 09 034 U1 und der DE 103 56 137 A1 bekannt. Die verschiedenen in der DE 200 09 034 U1 beschriebenen Ausführungsbeispiele sind jeweils aus zwei oder mehr Teilschalen ausgebildet. Das aus der DE 103 56 137 A1 bekannte rohrartige Hohlprofil besteht aus zwei aus einem Blech ausgebildeten Schalen, die um eine Biegelinie zusammengebogen werden.

Aus der DE 1 652 593 A bzw. US 3,461,531 ist ein Verfahren zur Herstellung eines rohrförmigen Produkts bekannt, bei welchem in einem ebenen Blech zunächst eine Reihe von parallel zueinander verlaufenden Nuten geprägt werden, die in zeitlich fortschreitender Folge seitlich nach außen von einer Mittelnut aus geformt werden. In einem weiteren Verfahrensschritt wird das Blech perforiert. Der in der Länge abgeschnittene und perforierte Blechstreifen wird quer zum Streifen rohrförmig zusammengebogen, wobei die beiden Längsränder miteinander verbunden werden, insbesondere durch Punktschweißungen. An dem rohrförmigen Rohling wird in der Folge ein Aufweitevorgang, vorzugsweise durch einen Spreizdorn durchgeführt, wobei Wellungen ausgebildet werden. Durch die im Fertigprodukt ausgebildeten Öffnungen werden die Zusammendrückeigenschaften des fertigen Rohrs geregelt.

Aufgabe der Erfindung ist es ein Verfahren der eingangs genannten Art bereitzustellen, durch welches ein in Form eines Wellrohrs ausgebildetes deformierbares Element einer Lenkspindel für ein Kraftfahrzeug besonders kostengünstig herstellbar ist. Erfindungsgemäß gelingt dies durch ein Verfahren mit den Merkmalen des Anspruchs 1.

Erfindungsgemäß wird als Ausgangsmaterial für das Wellrohr ebenes Blech verwendet. Hierbei werden in einer Ausführungsvariante der Erfindung in einem gemeinsamen Blechteil in parallele Längsrichtungen verlaufende (=parallele Längsachsen aufweisende) Teilschalen, vorzugsweise zwei Halbschalen, ausgebildet, die mit quer zu ihren Längsrichtungen ausgerichteten Wellungen versehen sind, d.h. die Wellenberge und -täler der Wellungen erstrecken sich in Ebenen, die quer, vorzugsweise rechtwinklig, zur Längserstreckung der Teilschalen stehen. Hierbei werden vorzugsweise zunächst zwei nebeneinander angeordnete rinnenförmige Vertiefungen in das gemeinsame ebene Blechteil eingebracht und im weiteren Verlauf des Verfahrens die von den beiden rinnenförmigen Vertiefungen gebildeten Halbschalen mit quer zu ihren Längsrichtungen ausgerichteten Wellungen versehen, einstufig oder in mehreren Stufen. Im weiteren Verlauf des Verfahrens wird das Blechteil im Bereich zwischen den beiden Halbschalen um eine parallel zur Längsrichtung der Halbschalen liegende Achse gefaltet oder gebogen und die zunächst freien Längsränder der Halbschalen werden zur gegenseitigen Anlage gebracht und in der Folge miteinander verbunden, vorzugsweise verschweißt. Wenn z.B. statt zwei Halbschalen drei Drittelschalen ausgebildet werden, so werden zwei Faltungen um parallel zur Längsrichtung der Drittelschalen liegende Achsen, die jeweils zwischen zwei Drittelschalen liegen, durchgeführt. Die zur gegenseitigen Anlage gebrachten, zuvor freien Längsränder, werden wiederum miteinander verbunden. Jede Drittelschale erstreckt sich im fertiggestellten Zustand des Wellrohrs über etwa 120° des Umfangs.

In einer zweiten Ausführungsvariante der Erfindung werden separate, mit quer zu ihren Längsrichtungen ausgerichteten Wellungen versehene Teilschalen, vorzugsweise zwei Halbschalen, ausgebildet, entweder durch Verwendung von vornherein separaten Blechteilen oder durch Verwendung von einem einzelnen Blechteil, welches im Laufe des Verfahrens durch eine Stanzoperation aufgeteilt wird, so dass zwei oder mehrere getrennte Teilschalen ausgebildet werden. Zur Ausbildung einer jeweiligen Teilschale wird vorzugsweise zunächst eine rinnenförmige Vertiefung ausgebildet und diese im Weiteren mit quer, vorzugsweise rechtwinklig, zu ihrer Längsrichtung ausgerichteten Wellungen versehen. Im weiteren Verlauf des Verfahrens werden die Teilschalen mit ihren Längsrändern unter Ausbildung eines vollständigen Wellrohrs aneinandergelegt und im Bereich ihrer Längsränder miteinander verbunden, vorzugsweise verschweißt.

Durch die Verwendung von ebenem Blech aus Ausgangsmaterial kann in der erfindungsgemäßen Weise ein Wellrohr sehr kostengünstig ausgebildet werden, da Blech billiger ist wie vorgefertigte zylindrische Rohre. Insbesondere bei der Massenproduktion sind bereits kleinere Kostenersparnisse bei der Produktion von wesentlicher Bedeutung.

Gemäß der Erfindung wird zumindest einer von zwei zur gegenseitigen Anlage vorgesehenen Längsrändern der Teilschalen mit in Längsrichtung der jeweiligen Teilschale voneinander beabstandeten Ausnehmungen versehen. Im verbundenen Zustand von zwischen den Ausnehmungen liegenden Abschnitten dieses Längsrandes mit dem entsprechenden Längsrand der anderen Teilschale kann dadurch eine Reihe von in Längsrichtung des Wellrohrs beabstandeten Öffnungen durch den Mantel des Wellrohrs ausgebildet werden. Die achsiale Komprimierbarkeit bzw. die Knicksteifigkeit des Wellrohrs im Bereich der verbundenen Längsränder kann dadurch verringert werden. Bei der Ausführungsvariante, bei der das Wellrohr aus mindestens zwei von separaten Teilen gebildeten Teilschalen ausgebildet ist, werden solche Öffnungen somit in jedem der Verbindungsbereiche, in welchem die Längsränder von zwei Teilschalen in gegenseitige Anlage gebracht sind, vorgesehen. Mit anderen Worten, wird eine jeweilige Verbindungsnaht zwischen aneinander anliegenden Seitenrändern von Teilschalen zwischen Verbindungsstellen der Verbindungsnaht durch Öffnungen unterbrochen, die in achsialer Richtung des Wellrohrs voneinander beabstandet sind. Bei der Ausführungsvariante, bei der die Teilschalen in einem gemeinsamen Blechteil ausgebildet werden, der nach der Einbringung der Wellungen gefaltet oder gebogen wird, ist es bevorzugt, dass im Bereich zwischen den Teilschalen, also im zwischen den Teilschalen liegenden Bereich der Faltung bzw. Biegung des Blechteils, das Blechteil mit einer Reihe von in Längsrichtung der Teilschalen voneinander beabstandeten Öffnungen versehen wird. Auch im Bereich des sich durch das Zusammenfalten bzw.-biegen des Blechteils sich ergebenden Biegerückens kann dadurch die erforderliche Kraft für ein achsiales Komprimieren des Wellrohrs bzw, ein Ausknicken des Wellrohrs herabgesetzt werden.

Insgesamt kann ein Wellrohr ausgebildet werden, welches somit über den gesamten Umfang ausreichend deformierbar ist, um als im Crashfall deformierbares Element einer Lenksäule eines Kraftfahrzeugs eingesetzt zu werden. Hierbei kann beim Einsatz in der Lenkspindel ein ausreichend hohes Drehmoment übertragen werden. In einer vorteilhaften Ausführungsform der Erfindung weist das Wellrohr nur eine Verbindungsnaht auf. Hierbei ist vorzugsweise vorgesehen, dass an einer der Verbindungsnaht im Wesentlichen gegenüberliegenden Umfangsstelle des Wellrohrs ein Biegerücken vorhanden ist, in dem eine Reihe von Öffnungen angeordnet ist.

Die die mindestens eine Verbindungsnaht zwischen den Teilschalen unterbrechenden Öffnungen liegen vorteilhafterweise in den Bereichen der Wellenberge. Bei einer Ausbildung des Wellrohrs mit einem Biegerücken, ist es bevorzugt, dass in diesem angeordnete Öffnungen sich an den achsialen Stellen des Wellrohrs befinden, an denen die Wellenberge liegen.

Eine mögliche Ausführungsform der Erfindung sieht vor, dass das Wellrohr zwei- oder mehrschichtig ausgebildet ist.

Weitere Vorteile und Einzelheiten der Erfindung werden im Folgenden anhand der beiliegenden Zeichnung erläutert. In dieser zeigen:
- Fig. 1 bis 3: verschiedene Fertigungsstadien bei der Ausbildung eines Wellrohrs aus ei- nem ebenen Blech gemäß einer ersten Ausführungsform der Erfindung, in Schräg- sicht;
- Fig. 4 und 5: Querschnitte im Bereich eines Wellenbergs und Wellentals durch das ge- formte Blech im Fertigungszustand gemäß Fig. 3;
- Fig. 6: eine schematische Draufsicht auf ein Tiefziehwerkzeug, in welches das zu formende Blech eingelegt ist, im geschlossenen Zustand;
- Fig. 7 und 8: Schnitte entlang der Linien A-A und B-B von Fig. 6;
- Fig. 9: eine schematische Schrägsicht des Werkzeuges im geöffneten Zustand mit dem zwischen den Formteilen angeordneten Blech;
- Fig. 10 und 11: Querschnitte durch den Blechstreifen im Bereich des Wellenbergs und Wellentals, in einer weiteren Herstellungsphase;
- Fig. 12 und 13: Querschnitte durch den Blechstreifen im Bereich des Wellenbergs und Wellentals in einer weiteren Herstellungsphase;
- Fig. 14: eine Schrägsicht des Blechstreifens in der Herstellungsphase gemäß Fig. 12 und 13;
- Fig. 15 und 16: Schrägsichten des fertiggestellten Wellrohrs, um 180° zueinander um die Längsachse des Wellrohrs gedreht;
- Fig. 17 bis 21: Fertigungsstadien bei der Ausbildung eines aus einem flachen Blech auge- bildeten Wellrohrs gemäß einem zweiten Ausführungsbeispiel der Erfindung, in Schrägsicht;
- Fig. 22 und 23: das fertiggestellte Wellrohr gemäß diesem zweiten Ausführungsbeispiel in Schrägsicht, um 180° um die Längsachse des Wellrohrs gegeneinander gedreht;
- Fig. 24 bis 29: Stadien bei der Herstellung eines Wellrohrs aus einem ebenen Blechstreifen gemäß einem dritten Ausführungsbeispiel der Erfindung, jeweils in Schrägsicht;
- Fig. 30: eine Überblicksdarstellung des Blechstreifens, der die Blechteile in den verschie- denen Fertigungsstadien enthält;
- Fig. 31 und 32: Stadien bei der Herstellung eines Wellrohrs gemäß einem vierten Ausfüh- rungsbeispiel der Erfindung, in Schrägsicht;
- Fig. 33: das fertiggestellte Wellrohr gemäß diesem vierten Ausführungsbeispiel der Erfin- dung in Schrägsicht;
- Fig. 34: das um 180° um seine Längsachse gedrehte Wellrohr;
- Fig. 35: ein Stadium bei der Herstellung eines Wellrohrs gemäß einem fünften Ausfüh- rungsbeispiel der Erfindung, in Schrägsicht;
- Fig. 36: eine Schrägsicht des fertiggestellten Wellrohrs gemäß diesem fünften Ausfüh- rungsbeispiel der Erfindung;
- Fig. 37: das Wellrohr um 180° um seine Längsachse gedreht;
- Fig. 38: ein Stadium bei der Herstellung eines Wellrohrs gemäß einem sechsten Ausfüh- rungsbeispiel der Erfindung, in Schrägsicht;
- Fig. 39: das fertiggestellte Wellrohr gemäß diesem sechsten Ausführungsbeispiel der Er- findung, in Schrägsicht;
- Fig. 40: das Wellrohr von Fig. 39 um 180° um seine Längsachse gedreht;
- Fig. 41: eine schematische Darstellung eines Werkzeuges zur Herstellung eines Wellrohrs entsprechend dem dritten Ausführungsbeispiel der Erfindung, wobei Teile des Werkzeugrahmens der Übersichtlichkeit halber entfernt sind, in Schrägsicht;
- Fig. 42 und 43: eine schematische vergrößerte Darstellung der Falteinrichtung des Werk- zeuges von Fig. 41, im geöffneten und geschlossenen Zustand;
- Fig. 44: den Balgteil des Werkzeuges von Fig. 41, wobei Teile der Presseinheit und des Werkzeugrahmens der Übersichtlichkeit halber weggelassen sind, im geöffneten Zustand;
- Fig. 45: den in Fig. 44 dargestellten Balgteil des Werkzeuges, aber im geschlossenen Zu- stand des Werkzeuges;
- Fig. 46 und 47: Schnitte durch den Balgteil des Werkzeuges entlang der Linie C-C von Fig. 50 im geöffneten und geschlossenen Zustand;
- Fig. 48 und 49: Schnitte entlang der Linie D-D von Fig. 50 im geöffneten und geschlosse- nen Zustand des Werkzeuges;
- Fig. 50 und 51: Schnitte entlang der Linie E-E von Fig. 46, im geöffneten und geschlosse- nen Zustand des Werkzeuges;
- Fig. 52: einen Teil des Balgteils des Werkzeuges, wobei die oberen Balgplatten und Zwi- schenplatten nach Art einer Explosionszeichnung auseinandergezogen dargestellt sind, im geöffneten Zustand;
- Fig. 53: einen Teil des Balgteil des Werkzeuges, wobei die unteren Balgplatten und Zwi- schenplatten nach Art einer Explosionsdarstellung auseinandergezogen dargestellt sind, im geöffneten Zustand.

Die Zeichnungen weisen unterschiedliche Maßstäbe auf.

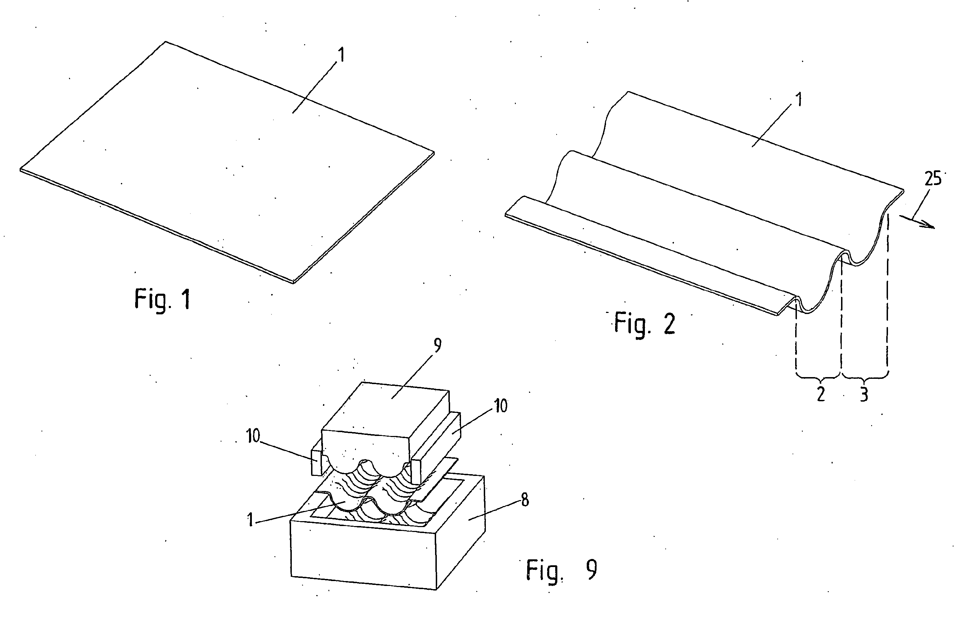

Ein erstes Ausführungsbeispiel der Erfindung wird im Folgenden anhand der Fig. 1 bis 16 erläutert. Das Wellrohr wird aus einem ebenen, streifenförmigen Blechteil 1 (=Platine) als Ausgangsprodukt ausgebildet. In das ebene bzw. flache Blechteil 1 werden zunächst durch Biegeoperationen zwei rinnenförmige Vertiefungen eingebracht. Diese bilden jeweils eine Teilschale 2, 3, hier eine Halbschale, des auszubildenden Wellrohrs aus und sind hierbei im Blechteil 1 längs nebeneinander angeordnet, wobei ihre Längsrichtungen 25, in die sie verlaufen bzw. Längsachsen parallel zueinander sind.

In der Folge werden die beiden Teilschalen 2, 3 mit Wellungen 4, 5 versehen, die quer zu den Längsachsen der Teilschalen bzw. Längsrichtungen 25, in die die rinnenförmigen Vertiefungen verlaufen, liegen, d.h. die Wellenberge 6 und Wellentäler 7 der Wellungen 4, 5 liegen in Ebenen, die quer zur Längsachse bzw. Längsrichtung 25 der jeweiligen Teilschale 2, 3 liegen, vorzugsweise rechtwinklig. Die Wellungen erstrecken sich im gezeigten Ausführungsbeispiel über einen mittleren Abschnitt der Längsausdehnung der Teilschalen 2, 3.

Die Wellungen 4, 5 werden in diesem Ausführungsbeispiel der Erfindung durch Tiefziehwerkzeuge eingebracht, wobei mehrere Tiefziehschritte durchgeführt werden, in denen die Wellungen 4, 5 jeweils in ihrer Amplitude vergrößert werden (die Anzahl der Tiefziehschritte richtet sich auch nach der schlussendlich zu erreichenden Amplitude der Wellungen). Hierzu werden Tiefziehwerkzeuge mit Wellungen jeweils entsprechend vergrößerter Amplitude eingesetzt.

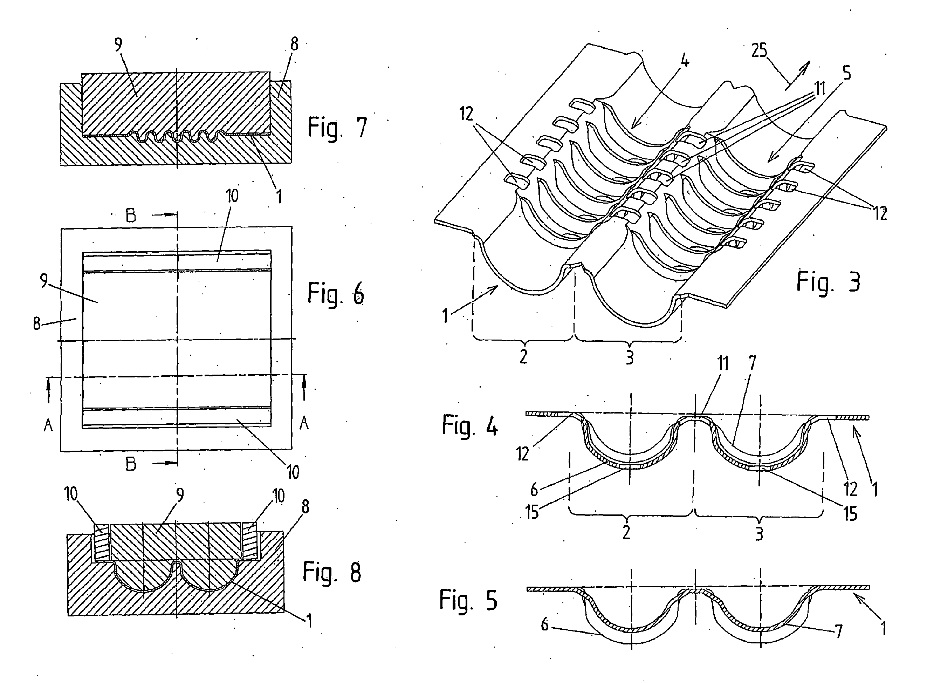

In den Fig. 6 bis 9 ist ein solches Tiefziehwerkzeug einer der Stufen des Tiefziehens schematisch dargestellt. Das Tiefziehwerkzeug umfasst ein feststehendes unteres Formteil 8 und ein bewegliches oberes Formteil 9, wobei das untere Formteil 8 rinnenförmige Vertiefungen mit quer hierzu ausgerichteten Wellungen und das obere Formteil 9 mit den rinnenförmigen Vertiefungen des unteren Formteils zusammenpassende Erhebungen mit quer hierzu ausgerichteten Wellungen aufweist, wobei die Wellungen des unteren und oberen Formteils gegengleich ineinanderpassend ausgebildet sind, vgl. Fig. 7. Beim Schließen des Tiefziehwerkzeuges mit dem dazwischen eingelegten, vorgeformten Blechteil 1 laufen Niederhalteleisten 10 zur Fixierung des Blechteils 1 dem oberen Formteil 9 vor, vgl. Fig. 9. Durch mehrere Tiefziehwerkzeuge dieser Art, die mit unterschiedlich hohen Wellungen versehen sind, können die Teilschalen fortlaufend stärker gewellt werden.

Tiefziehen in mehreren Stufen bzw. Schritten mit jeweils vergrößerter Umformung ist an sich bekannt.

Fig. 3 zeigt ein Stadium, in welchem die Wellungen 4, 5 erst einen Teil ihrer letztlich zu erreichenden Amplitude (also die zwischen den Wellenbergen 6 und Wellentälern 7 gemessene Höhe) aufweisen. In diesem Stadium werden Löcher bzw. Öffnungen 11, 12 in das vorgeformte Blechteil 1 eingebracht, vorzugsweise durch Ausstanzen. Im Bereich der durchzuführenden Stanzungen sind die Wellenberge in diesem Stadium noch niedrig. Eine Reihe von Öffnungen 11, die in Längsrichtung der Teilschalen 2, 3 voneinander beabstandet sind, werden im Bereich zwischen den beiden Teilschalen 2, 3 eingebracht, also wenn man das Blechteil 1 von der konkaven Seite der Teilschalen 2, 3 betrachtet, im Bereich der Kuppe zwischen den beiden Teilschalen 2, 3. Zwei weitere Reihen von Öffnungen 12 werden im Bereich der auszubildenden Längsränder der Teilschalen 2, 3 eingebracht und sind wiederum in Längsrichtung der Teilschalen voneinander beabstandet. Diese Öffnungen 12 erstrecken sich in noch zu entfernende Seitenteile 13, 14 des Blechteils 1 hinein.

In Fig. 4 und Fig. 5 sind Querschnitte durch das Herstellungsstadium gemäß Fig. 3 dargestellt, wobei die Schnitte durch einen Wellenberg (Fig. 4) bzw. ein Wellental (Fig. 5) verlaufen. Im Rahmen dieser Schrift werden Wellenberge und Wellentäler von Wellungen immer auf die Ansicht der Teilschalen 2, 3 von ihren konvexen Seiten her bzw. auf die Außenseite des fertiggestellten Wellrohrs bezogen.

Vorzugsweise werden weitere Reihen von Löchern bzw. Öffnungen 15 in einem bezogen auf die Umfangserstreckung mittleren Bereich einer jeweiligen Teilschale 2, 3 eingebracht, und zwar im Bereich der Wellenberge 6. Diese weiteren Öffnungen 15 dienen zur Erleichterung des Ausfließens von eventuell in das fertiggestellte Wellrohr bei dessen Benutzung, z.B. im Kraftfahrzeug, eingedrungenem Wasser (wegen der Eisdruck-Gefahr).

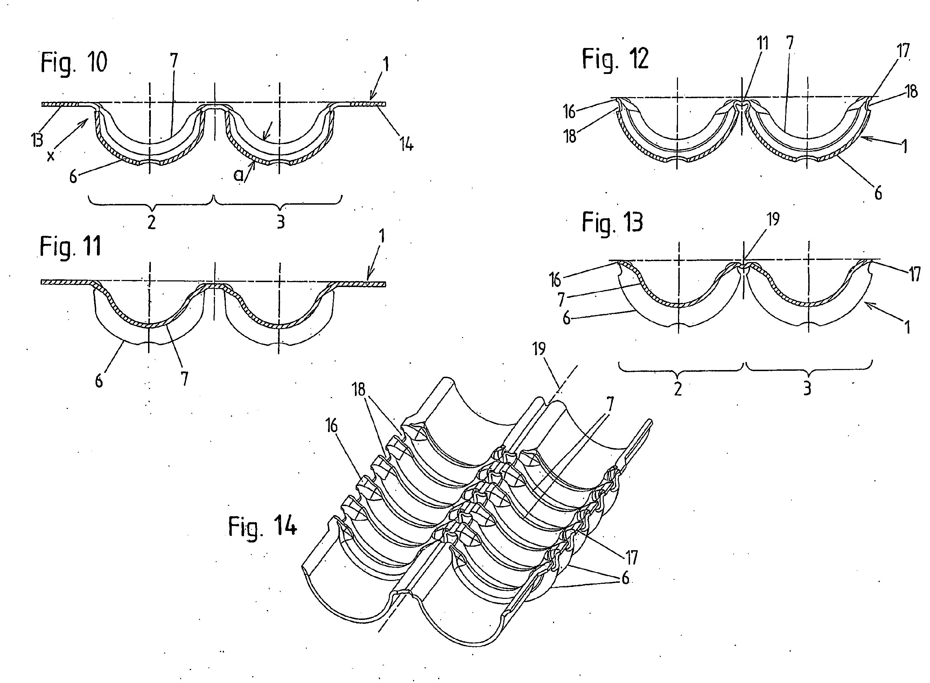

In mindestens einem weiteren Tiefziehschritt wird die Amplitude der Wellungen 4, 5 nochmals vergrößert, wie dies in Fig. 10 und 11 dargestellt ist. Auch die Breiten der rinnenförmigen Vertiefungen werden an in Fig. 10 mit dem Pfeil X bezeichneten Stellen geweitet, und zwar in den jeweiligen Bereichen der Wellenberge, wobei die Öffnungen 11, 12 weiter in den Bereich der Rinnen hinein zu liegen kommen.

In mindestens einem weiteren Tiefziehschritt werden die rinnenförmigen Vertiefungen (in den Bereichen der Wellenberge an den in Fig. 10 mit dem Pfeil X bezeichneten Stellen) in ihrer Breite nochmals geweitet, wie dies aus den Fig. 12 bis 14 ersichtlich ist, und eventuell die Amplituden der Wellungen nochmals vergrößert. Hierbei wandern die Öffnungen 11, 12 noch weiter in den Bereich der Rinnen. Weiters werden die Seitenteile 13, 14 entfernt, vorzugsweise durch eine Stanzoperation. Hierdurch werden an den voneinander entfernten Längsseiten der Teilschalen 2, 3 Längsränder 16, 17 ausgebildet, die mit einer Reihe von in Längsrichtung der Teilschalen 2, 3 voneinander beabstandeten Ausnehmungen 18 versehen sind, welche von Teilen der zuvor vorhandenen Öffnungen 12 gebildet werden.

Z.B. kommt es durch diese Tiefziehschritte zu derartigen Beanspruchungen, dass die Blechdicke je nach Umformzone um 60 - 80% gestreckt (geschwächt) wird, je nach Amplitude der ausgebildeten Wellungen. Evtl. können Glühstufen erforderlich sein, je nach verwendetem Material.

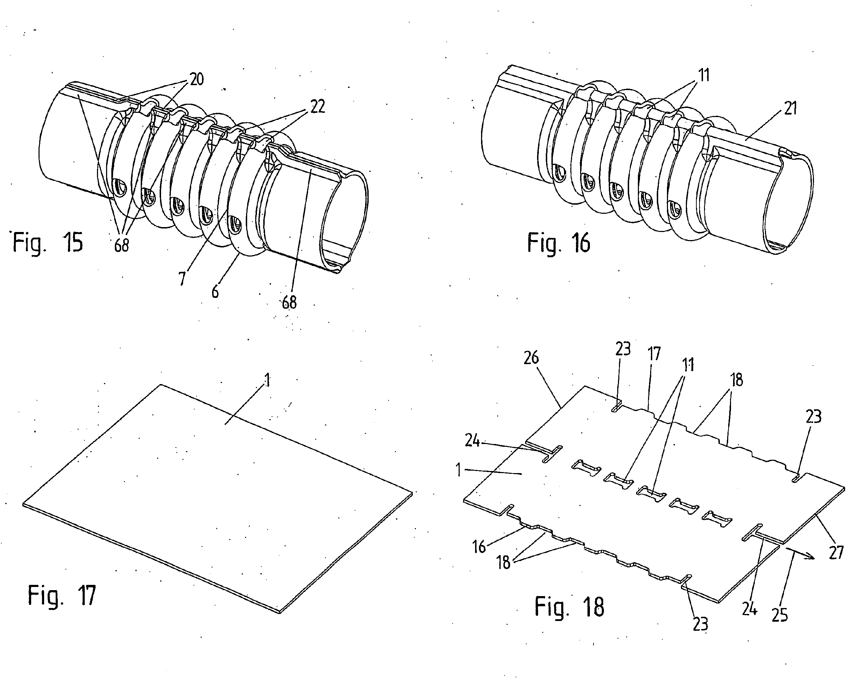

In der Folge wird das vorgeformte Blechteil 1 im Bereich zwischen den beiden Teilschalen 2, 3 um eine parallel zur Längsrichtung der Teilschalen liegende Achse 19 gefaltet bzw. gebogen. Diese Achse 19 ist in Fig. 13 und 14 durch eine strichlierte Linie angedeutet. Bei Betrachtung der Teilschalen 2, 3 von der konkaven Seite der Teilschalen 2, 3 her liegt diese Achse 19 somit im Bereich des Rückens zwischen den beiden Teilschalen 2, 3. Durch diese Faltung bzw. Biegung werden die zwischen den Ausnehmungen 18 liegenden Abschnitte der Längsränder 16, 17 zur gegenseitigen Anlage gebracht und in der Folge miteinander verbunden, vorzugsweise verschweißt. Die hier als Schweißnaht ausgebildete Verbindungsnaht 20 ist in Fig. 15 schematisch durch eine verdickte Linie dargestellt.

Insgesamt ist somit ein Wellrohr ausgebildet worden, wie es in den Fig. 15 und 16 dargestellt ist, welches Wellungen aufweist, die sich über einen Teil seiner Länge erstrecken. Auf gegenüberliegenden Seiten seiner Umfangserstreckung weist das Wellrohr einerseits einen Biegerücken 21, andererseits nach außen, vorzugsweise radial nach außen, abstehende Laschen 68 auf, die im Bereich der Längsränder 16, 17 der Teilschalen 2, 3 verbunden sind. Die hier in Form von Halbschalen ausgebildeten Teilschalen 2, 3 erstrecken sich jeweils über etwa 180° des Umfangs des Wellrohrs. Im Bereich des Biegerückens 21 ist eine Reihe von Öffnungen 11 angeordnet. Im Bereich der miteinander verbundenen Längsränder 16, 17 ist eine Reihe von in Längsrichtung beabstandeten Öffnungen 22 angeordnet, die von den Ausnehmungen 18 der beiden Längsränder 16, 17 ausgebildet werden und die zwischen den beiden Längsenden des Wellrohrs sich erstreckende, die beiden Teilschalenförmigen Abschnitte des Wellrohrs verbindende, Verbindungsnaht 20 unterbrechen. Die Reihen der Öffnungen 11 und 22 gewährleisten eine leichte achsiale Komprimierbarkeit des Wellrohrs trotz des Biegerückens 21 und der verbundenen Längsränder 16, 17.

Ein weiteres Ausführungsbeispiel der Erfindung wird im Folgenden anhand der Fig. 17 bis 23 erläutert. Wiederum wird als Ausgangsprodukt zur Herstellung eines Wellrohrs ein ebenes
(= flaches) Blechteil 1 (=eine ebene Blechplatte bzw. Platine) herangezogen. In diesem Ausführungsbeispiel werden im ebenen Blechteil 1 zunächst eine Reihe von Öffnungen 11 ausgebildet, die in eine Längsrichtung 25 voneinander beabstandet sind. Weiters werden Längsränder 16, 17 des Blechteils 1, welche in diesem Fertigungsstadium noch ein Übermaß aufweisen, jeweils mit einer Reihe von Ausnehmungen 18 versehen. Die einzelnen Ausnehmungen 18 der Längsränder 16, 17 liegen sich direkt gegenüber (befinden sich bezogen auf die Längserstreckung des Blechteils 1 an den gleichen Stellen der Längsränder 16, 17).

An den beiden Enden des Abschnitts, über welchen die Wellungen einzubringen sind, werden die Längsränder 16, 17 mit schlitzförmigen Ausnehmungen 23 versehen. Die Querränder 26, 27 des Blechteils 1 werden in ihrer Mitte jeweils mit einer T-förmigen Ausnehmung 24 versehen.

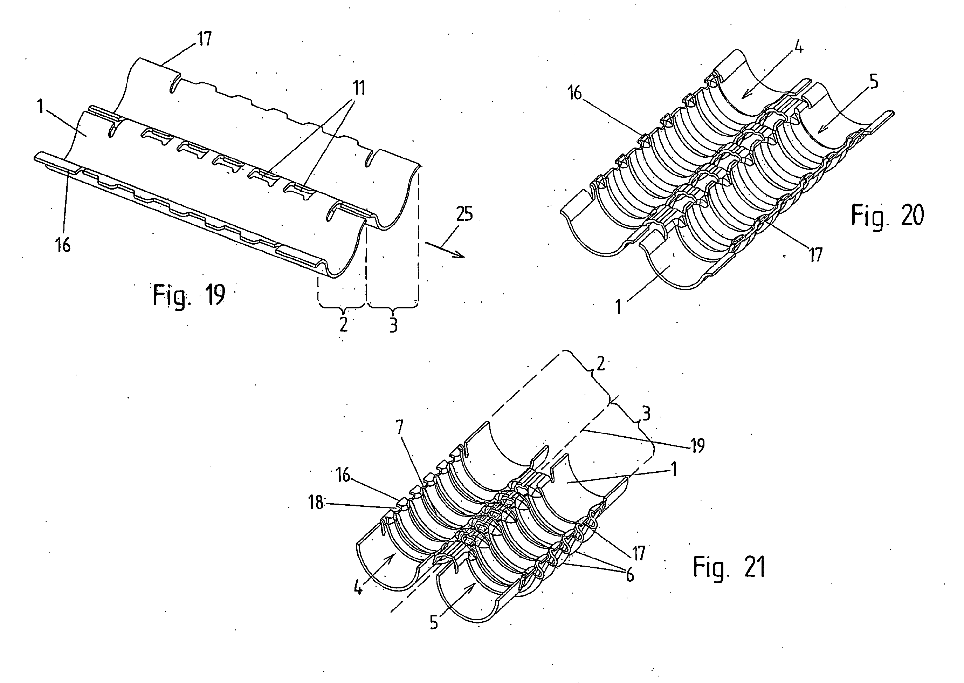

In der Folge werden wiederum in die Längsrichtung 25 verlaufende rinnenförmige Vertiefungen in das ebene Blechteil 1 eingebracht, welche Teilschalen 2, 3, im gezeigten Ausführungsbeispiel wiederum zwei Halbschalen des herzustellenden Wellrohrs ausbilden, die an einem ihrer Längsränder einstückig miteinander verbunden sind. Die Einbringung der rinnenförmigen Vertiefungen kann wiederum durch entsprechende Biegeoperationen erfolgen. Das vorgeformte Blechteil 1 in diesem Herstellungsstadium des Wellrohrs ist in Fig. 19 dargestellt.

In der Folge werden die beiden Teilschalen 2, 3 mit quer zu ihrer Längsrichtung ausgerichteten Wellungen 4, 5 versehen. Hierbei werden zunächst erste Wellungen 4, 5 eingebracht, die nur sehr geringe Ausprägungen (Amplituden) aufweisen, wie dies in Fig. 20 dargestellt ist. Diese ersten Wellungen 4, 5 können beispielsweise durch Prägen bzw. durch Tiefziehen mit einem entsprechend geringen Umformgrad ausgebildet werden. Z.B. weisen die Amplituden der ersten Wellungen 4, 5 weniger als 1/5 ihrer schlussendlich zu erreichenden Größe auf.

Diese ersten Wellungen 4, 5 werden in der Folge unter einer achsialen Komprimierung der Teilschalen 2, 3 aufgefaltet, bis sie ihre gewünschten Höhen erreichen. Das vorgeformte Blechteil 1 in diesem Herstellungsstadium ist in Fig. 21 dargestellt. Dieses achsiale Komprimieren unter Auffalten der Wellungen (=Vergrößern ihrer Amplituden) wird im Folgenden als " Balgen bezeichnet und weiter unten noch genauer erläutert. Z.B. wird durch eine solche achsiale Auffeltung der Wellungen das Blech derart beansprucht, dass eine Streckung im Bereich von 15 - 20% auftritt. Es wird daher eine geringere Ausgangsblechdicke als beim zuvor durch Tiefziehschritte ausgebildeten Wellrohr benötigt und Glühprozesse können evtl. vermieden werden.

Die Längsränder 16, 17 werden im Bereich der Laschen 68 genau beschnitten (Fig. 20). In den an die Längsenden anschließenden nicht gewellten Bereichen werden die Längsränder 16, 17 genau beschnitten und derart gebogen (vgl. Fig. 21), dass sich halbkreisförmige Querschnittsformen ergeben.

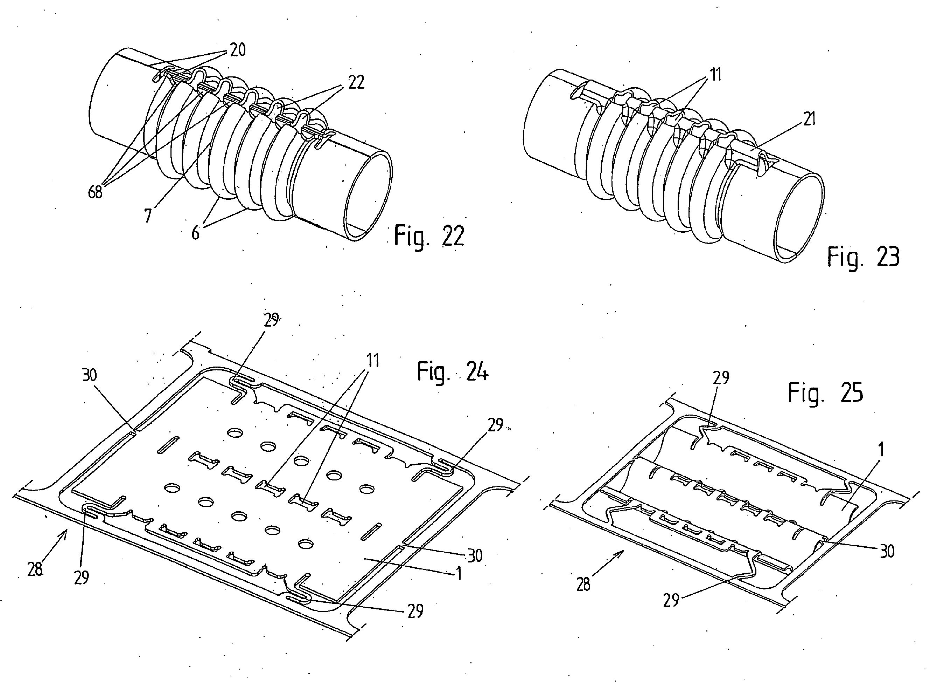

Das derart vorgeformte Blechteil 1 wird wiederum um eine parallel zur Längsrichtung der Teilschalen 2, 3 liegende Achse 19 gefaltet oder gebogen und die miteinander zur Anlage kommenden Abschnitte der Längsränder 16, 17 werden miteinander verbunden, vorzugsweise verschweißt, wodurch das in den Fig. 22 und 23 dargestellte Wellrohr ausgebildet wird. Im Bereich des Biegerückens 21 befinden sich wiederum eine Reihe von Öffnungen 22, die in Längsrichtung des Wellrohrs voneinander beabstandet sind. Ebenso befinden sich im Bereich der miteinander verbundenen Längsränder 16, 17 eine Reihe von Öffnungen 22, die in Längsrichtung des Wellrohrs voneinander beabstandet sind und von den Ausnehmungen 18 der beiden Längsränder 16, 17 herrühren.

Die Reihen der Öffnungen 11 und 22 gewährleisten eine leichte achsiale Komprimierbarkeit oder seitliches, knieartiges Wegknicken im Crash-Fall, wobei beispielsweise beim Einsatz in einer Lenkspindel eines Kraftfahrzeugs ausreichend hohe Drehmomente übertragen werden können.

Die Öffnungen 11 und/oder Ausnehmungen 18 können anstelle ihrer Einbringung in das noch ebene Blechteil 1 auch erst in einem späteren Stadium der Herstellung eingebracht werden, beispielsweise nach Ausbildung der die Teilschalen 2, 3 bildenden rinnenförmigen Vertiefungen.

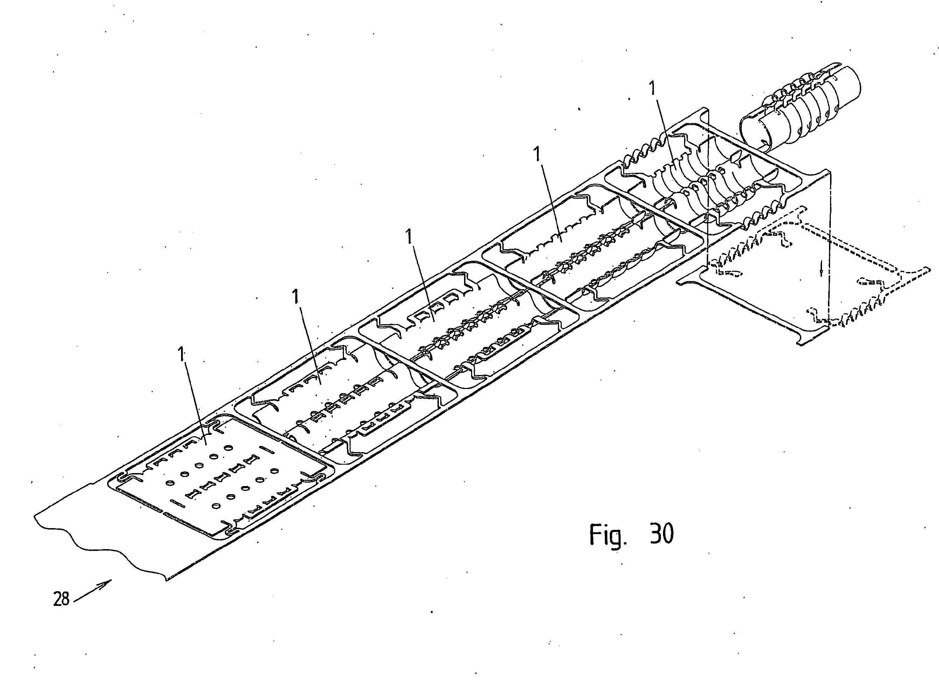

Ein weiteres Ausführungsbeispiel der Erfindung wird im Folgenden anhand der Fig. 24 bis 29 erläutert. Dieses Ausführungsbeispiel entspricht grundsätzlich dem zuvor erläuterten Ausführungsbeispiel, wobei hier eine fortlaufende Herstellung von Wellrohren in einem Folgeprozess aus einem bandförmigen Blechstreifen erfolgt. Der zusammenhängende Blechstreifen durchläuft also in getakteter Weise mehrere Arbeitsstationen, in welchen jeweils ein Fertigungsschritt durchgeführt wird (mittels eines Folgeschnitt-Werkzeuges). In den Fig. 24 bis 29 ist nur ein Abschnitt dieses Blechstreifens in einzelnen Stadien der Herstellung eines Wellrohres dargestellt. Fig. 30 zeigt als Überblicksdarstellung den zusammenhängenden Blechstreifen mit den Teilen in den verschiedenen Fertigungsstadien.

Fig. 24 zeigt ein Stadium, in welchem bereits eine Stanzoperation durchgeführt worden ist, wodurch ein Blechteil 1 aus dem Blechstreifen 28 freigestanzt worden ist, welches über gebogen verlaufende Verbindungsarme 29 und Verbindungsstege 30 mit dem restlichen Teil des Blechstreifens 28 verbunden ist.

Fig. 25 zeigt den Zustand nach der Einbringung der in Längsrichtung verlaufenden rinnenförmigen Vertiefungen zur Ausbildung der Teilschalen.

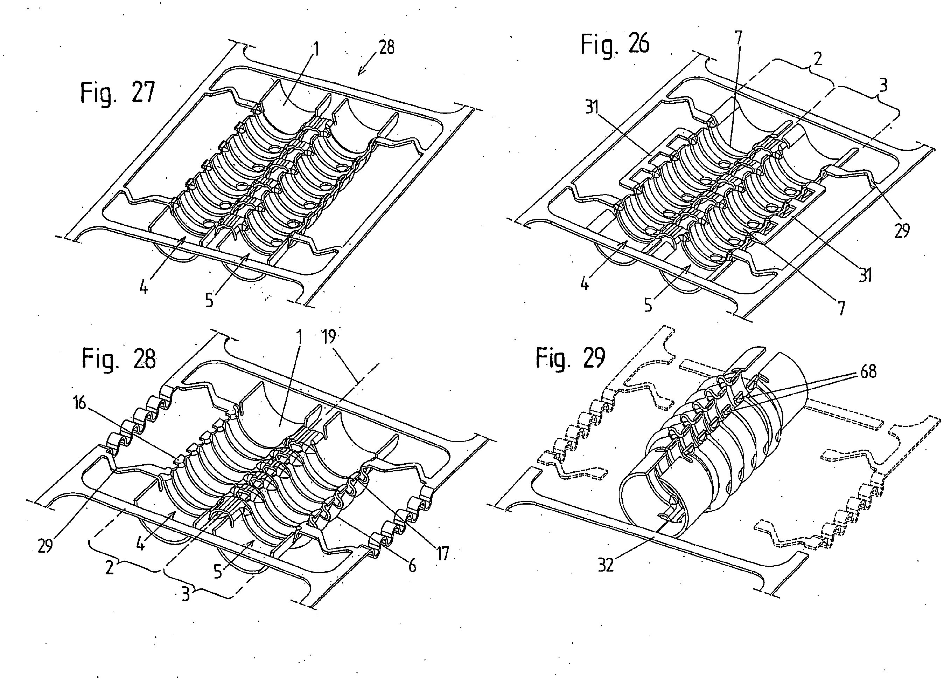

Fig. 26 zeigt den Zustand nach der Einprägung der ersten Wellungen 4, 5 mit geringen Tiefen bzw. Amplituden. Das Wellental 7 kann hierbei bereits seine Endform aufweisen.

Beim Zustand gemäß Fig. 27 wurden gegenüber Fig. 26 zuvor noch vorhandene Halteteile 31 weggestanzt, so dass die Längsränder 16, 17 Fertigmaß aufweisen. In der Folge erfolgt das weiter unten noch genauer zu erläuternde Balgen. Fig. 28 zeigt den Zustand nach diesem Balgen.

In der Folge wird das die beiden Teilschalen 2, 3 aufweisende vorgeformte Blechteil gefaltet bzw. gebogen, um die freien Längsränder 16, 17 der beiden Teilschalen 2, 3 zur Anlage zu bringen. Hierbei werden auch die Verbindungsarme 29 durch eine Stanzoperation abgetrennt. Fig: 29 zeigt den Zustand nach dem Zusammenfalten, wobei die beiden Längsränder 16, 17 noch nicht ganz in Anlage gebracht sind. Die entfernten Abfallteile des Blechstreifens sind strichliert dargestellt. Der noch durchgezogen dargestellte, vom auszubildenden Wellrohr getrennte Teil 32 des Blechstreifens dient als Anschlag und wird erst nach dem Freistanzen des nächsten herzustellenden Wellrohrs vom Blechstreifen abgetrennt und bildet dann wiederum ein Abfallteil.

In der Folge werden die zur Anlage gebrachten Längsränder 16, 17 noch miteinander verbunden, vorzugsweise verschweißt. Hierbei werden über den Bereich der Wellungen die im Bereich der Wellentäler nach außen abstehenden Laschen miteinander verbunden und weiters beidseitig der Wellungen die gerade ausgebildeten Abschnitte der Längsränder verbunden, wodurch sich im Querschnitt kreisförmige Rohrstutzen ergeben. Insgesamt wird eine durch im Bereich der Wellenberge angeordnete Öffnungen 22 unterbrochene Verbindungsnaht ausgebildet.

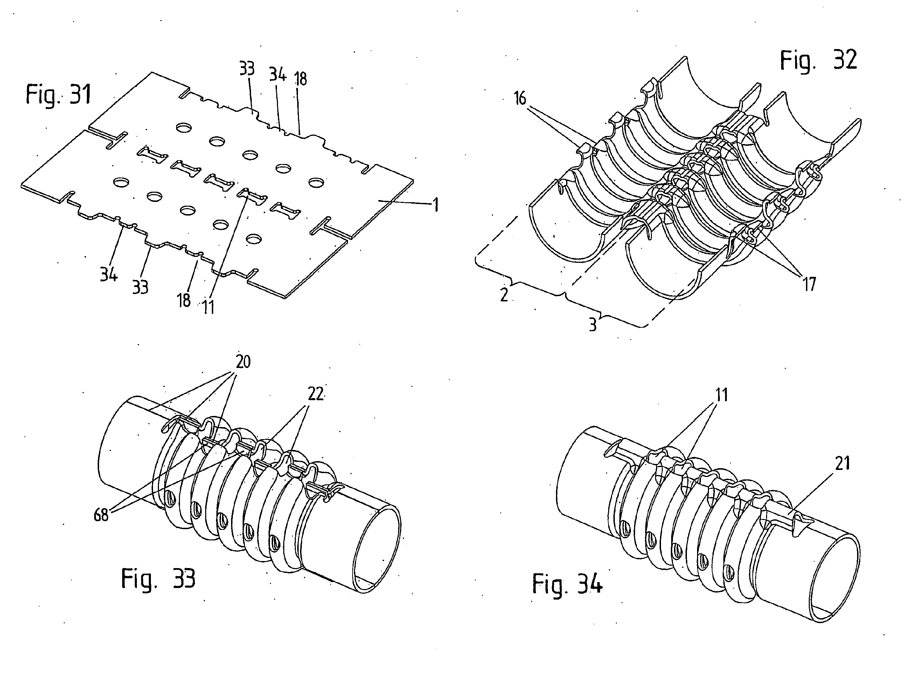

Das im Folgenden anhand der Fig. 31 bis 34 beschriebene vierte Ausführungsbeispiel der Erfindung unterscheidet sich von dem zuvor anhand der Fig. 17 bis 23 beschriebenen Ausführungsbeispiel der Erfindung zunächst durch die Ausbildung der Längsränder 16, 17 des Blechteils 1. Z.B. im flachen Zustand des Blechteils 1 werden die in diesem Verfahrensstadium noch Übermaß aufweisenden Längsränder 16, 17 hier so gestanzt, dass sich im Bereich, über den die Wellungen ausgebildet werden sollen, weiter vorspringende Laschen 33 und im Bereich von zwischen diesen Laschen 33 liegenden Ausnehmungen 18 weniger weit vorspringende Laschen 34 befinden. An den auf die Längserstreckung des auszubildenden Wellrohrs bezogenen Stellen, an denen sich am einen Längsrand 16 eine weiter vorspringende Lasche 33 befindet, befindet sich am anderen Längsrand eine weniger weit vorspringende Lasche 34 und umgekehrt.

Es folgen die Verfahrensschritte der Einbringung der rinnenförmigen Vertiefungen, der Prägung von nur gering ausgebildeten Wellungen, des Genauschnitts der Längsränder 16, 17 und der Balgung unter achsialer Komprimierung, wodurch ein vorgeformtes Blechteil entsprechend Fig. 32 ausgebildet wird, welches in der Folge wie zuvor beschrieben zusammengefaltet bzw. gebogen wird, worauf die im Bereich der Laschen 33, 34 zur Anlage kommenden Längsränder 16, 17 miteinander verbunden werden, vorzugsweise durch Schweißungen. Die Verbindungsstellen der Längsränder 16, 17 sind hierbei zick-zack-förmig gegeneinander versetzt, wobei sich zwischen den einzelnen Verbindungsstellen Öffnungen 22 befinden. Durch diese im Bereich der Wellungen zick-zack-förmig ausgebildete und durch die Reihe von Öffnungen 22 unterbrochene Verbindungsnaht 20 wird eine noch leichtere bzw. stärkere achsiale Komprimierbarkeit sowie ein größerer Knickwinkel des Wellrohrs im Verbindungsbereich der Längsränder 16, 17 erreicht.

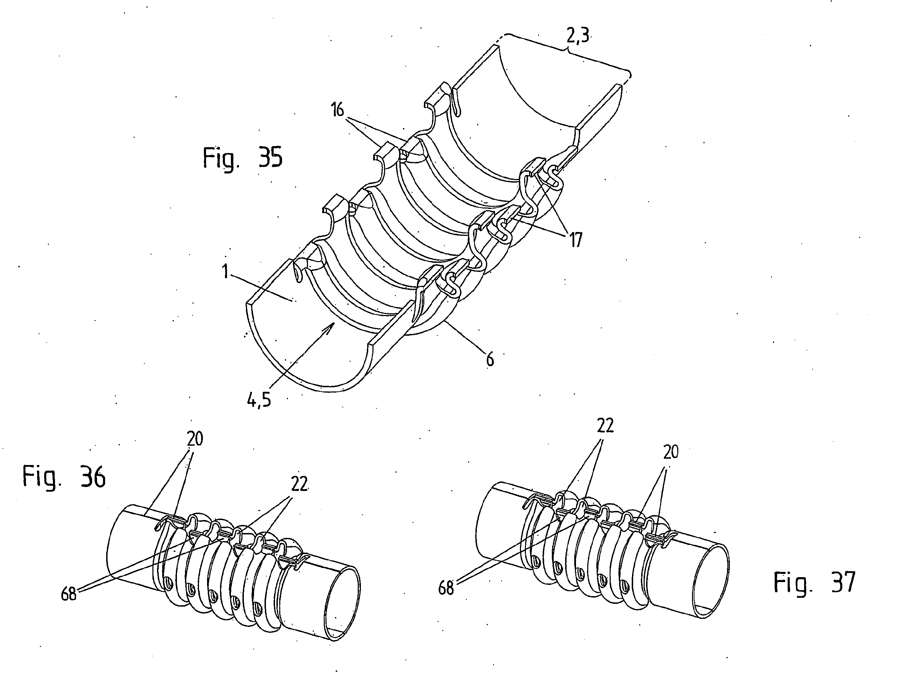

Bei dem im Folgenden anhand der Fig. 35 bis 37 beschriebenen Ausführungsbeispiel werden zunächst voneinander getrennte (=separate) Teilschalen 2, 3 ausgebildet. Es können hierbei von vornherein getrennte Blechteile zur Ausbildung dieser getrennten Teilschalen herangezogen werden oder es kann zunächst ein gemeinsames Blechteil als Ausgangsprodukt verwendet werden und die beiden Teilschalen erst im Laufe ihrer Herstellung voneinander getrennt werden.

Die Ausbildung einer jeweiligen Teilschale 2, 3 kann hierbei beispielsweise in völlig analoger Weise durchgeführt werden, wie dies in den vorausgehenden Ausführungsbeispielen für zwei zusammenhängende Teilschalen erläutert wurde. Anstelle des Zusammenfaltens bzw. Biegens der beiden zusammenhängenden Teilschalen werden aber nunmehr die beiden fertig ausgebildeten Teilschalen 2, 3 mit ihren Längsrändern 16, 17 derart zusammengelegt, dass sich die Form des fertigen Wellrohrs ergibt. In der Folge werden an den gegenüberliegenden Längsseiten des Wellrohrs die aneinanderliegenden Längsränder 16, 17 der beiden Teilschalen 2, 3 jeweils miteinander verbunden, insbesondere durch Verschweißungen. Zwischen den einzelnen Verbindungsstellen befindet sich hierbei wiederum eine Reihe von in achsialer Richtung des Wellrohrs des Wellrohrs voneinander beabstandeten Öffnungen 22, die die jeweilige Verbindungsnaht 20 unterbrechen. Die Verbindungsstellen können sich längs einer in achsialer Richtung verlaufenden Geraden befinden oder zick-zack-förmig gegeneinander versetzt sein, wie dies aus den Fig. 36 und 37 ersichtlich ist, wobei eine im Bereich der Wellungen zick-zack-förmig verlaufende, durch die Öffnungen 22 unterbrochene Verbindungsnaht 20 gebildet wird, und zwar an gegenüberliegenden Umfangsstellen des Wellrohrs. Letztere Ausführungsform erlaubt beidseitig einen größeren Ausknickwinkel beispielsweise im Crashfall.

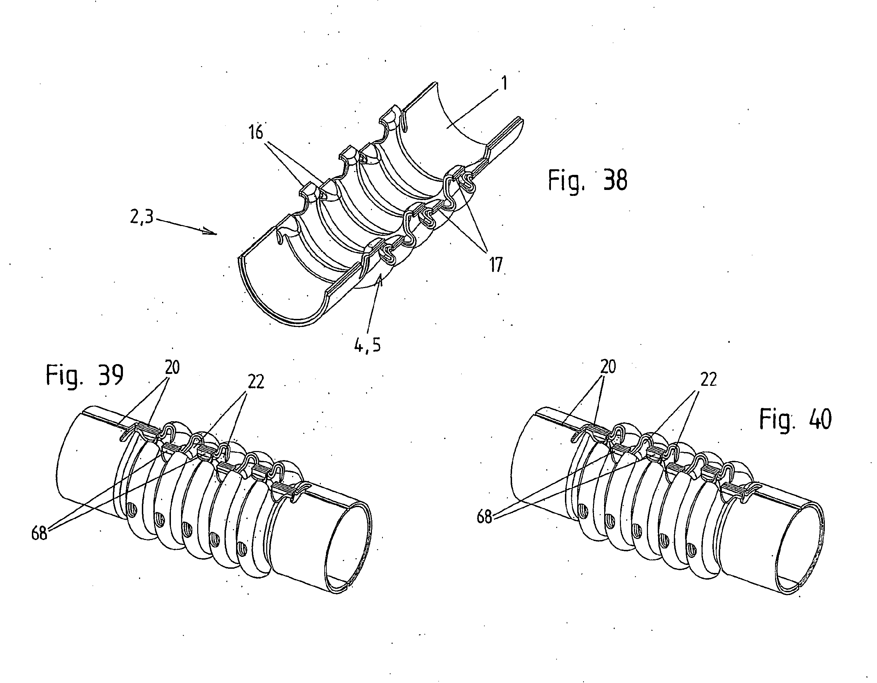

Bei den zuvor beschriebenen Ausführungsbeispielen war das flache Blech, aus dem das Wellrohr ausgebildet wird, jeweils einschichtig ausgebildet. Stattdessen könnte auch ein zwei- oder mehrschichtiges Blech herangezogen werden. Ein Ausführungsbeispiel für ein derartiges Herstellungsverfahren geht aus den Fig. 38 bis 40 hervor. Die beiden Blechschichten werden im flachen Zustand miteinander verbunden, beispielsweise in scherfreien Zonen durch entsprechende Schweißpunkte oder durch Durchsetzfügeverfahren aus dem Material selbst, wie Tox-Flachpunkt-Verfahren oder Clinchen. Die Teilschalen 2, 3 können wiederum in an einem ihrer Längsränder verbundener Weise oder getrennt voneinander ausgebildet werden. Eine solche getrennte Ausbildung zeigen die Fig. 38 bis 40. Die Herstellung entspricht im.Übrigen der beschriebenen einschichtigen Herstellung. Durch die Verwendung eines mehrlagigen Blechs als Ausgangsmaterial kann ein mehrschichtiges Wellrohr hergestellt werden. Ein solches besitzt eine größere Nachgiebigkeit gegenüber Verformungen beispielsweise im Crash-Fall, wobei dennoch ein hohes Drehmoment übertragen werden kann.

Die Ausbildung der Verbindungsnähte 20 durch Verschweißungen kann günstigerweise mittels einer wellenförmigen Schweißstrahlführung über die Stirnseiten der Laschen 68 erfolgen, wodurch diese in einem Arbeitsgang verbunden werden können.

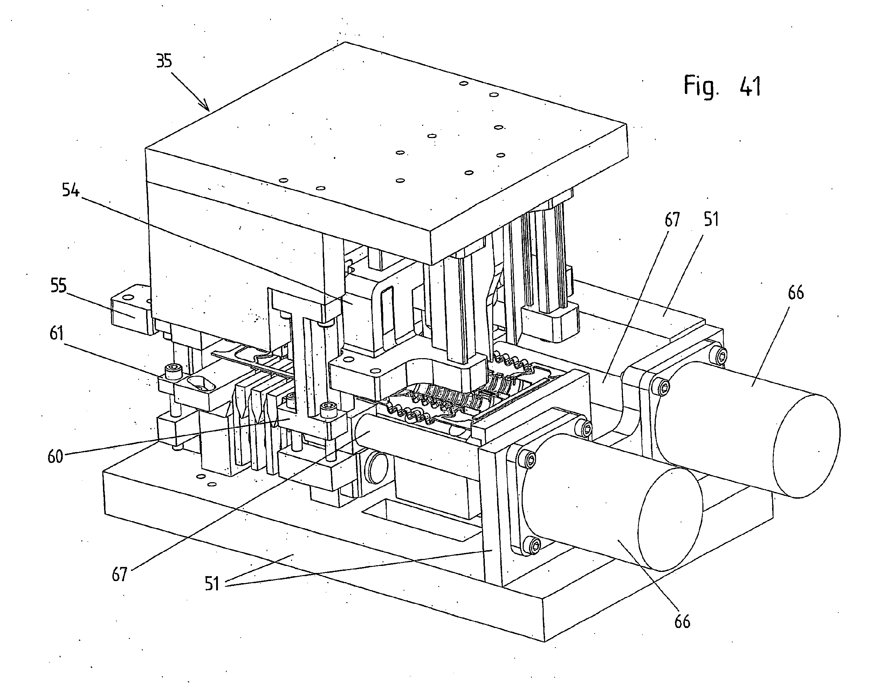

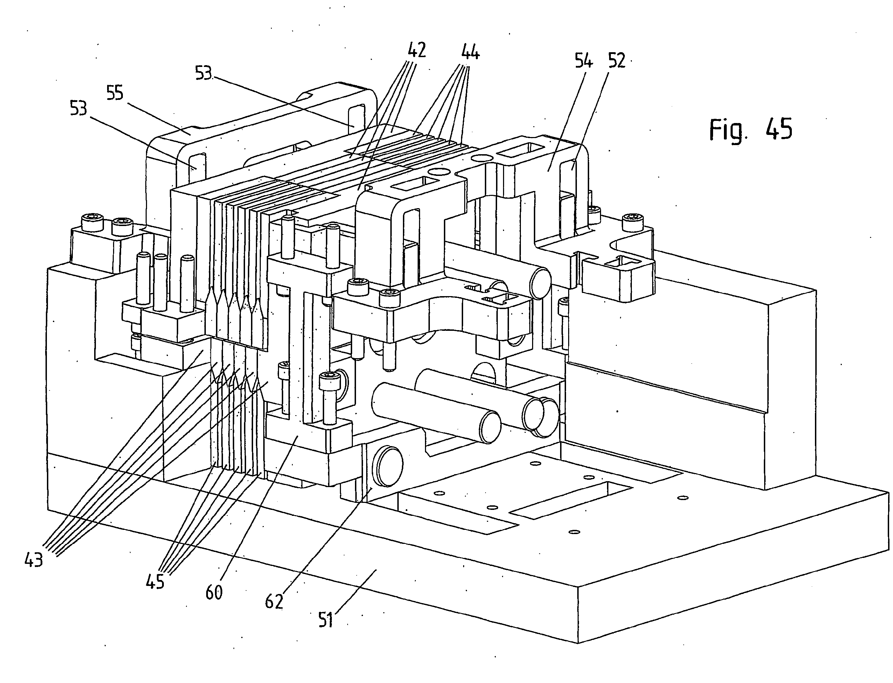

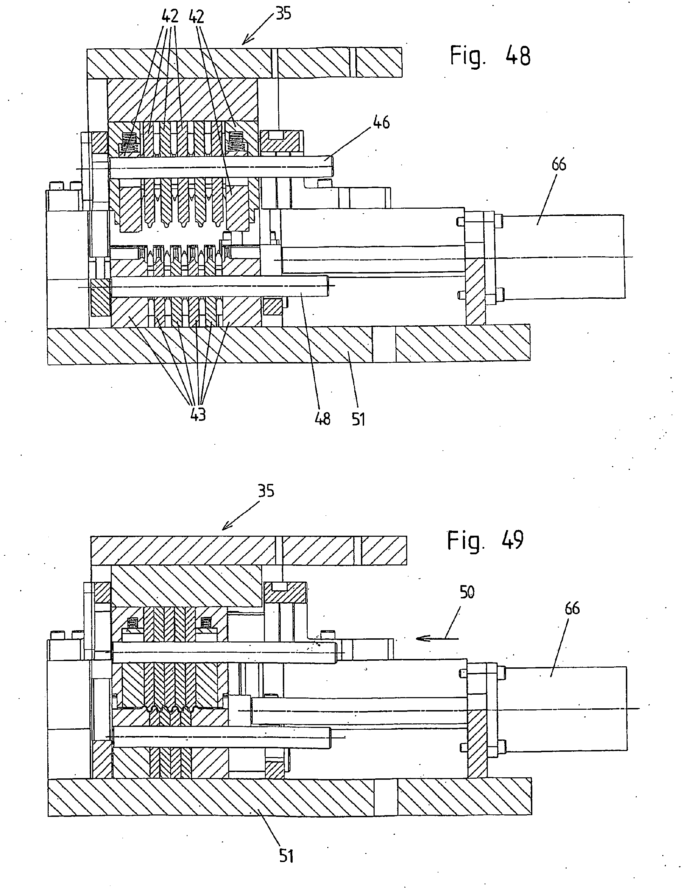

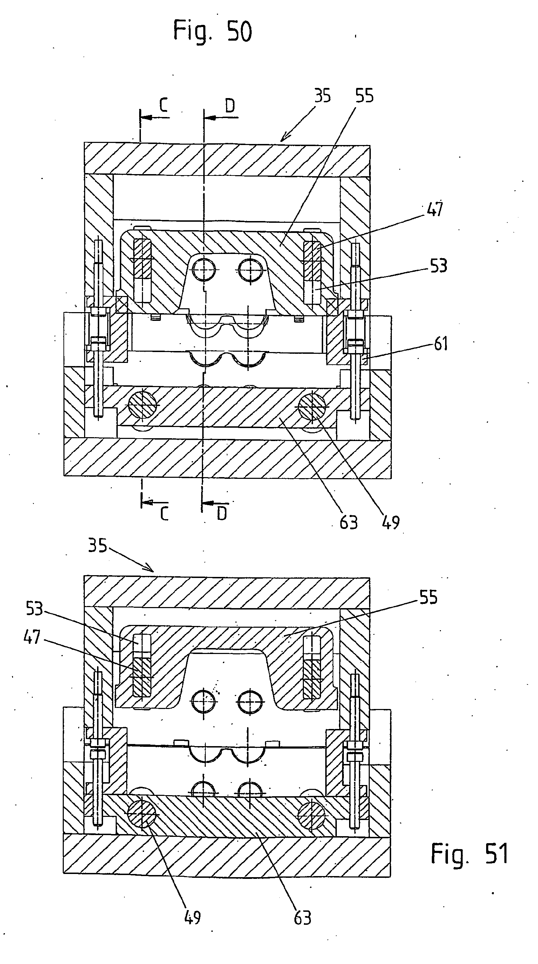

Die Fig. 41 bis 53 zeigen in vereinfachter Weise eine mögliche Ausführungsform eines Werkzeuges zum Balgen und anschließenden Falten, wenn das Wellrohr in einem Folgeprozess aus einem Blechstreifen ausgebildet wird, wie zuvor im dritten Ausführungsbeispiel anhand der Fig. 24 bis 29 beschrieben. Fig. 41 zeigt das Werkzeug im geöffneten Zustand mit dem innerhalb des Werkzeuges sich befindenden Teil des Blechstreifens, der zwei Abschnitte umfasst, in denen sich die beiden herzustellenden Wellrohre in unterschiedlichen Fertigungsstufen befinden.

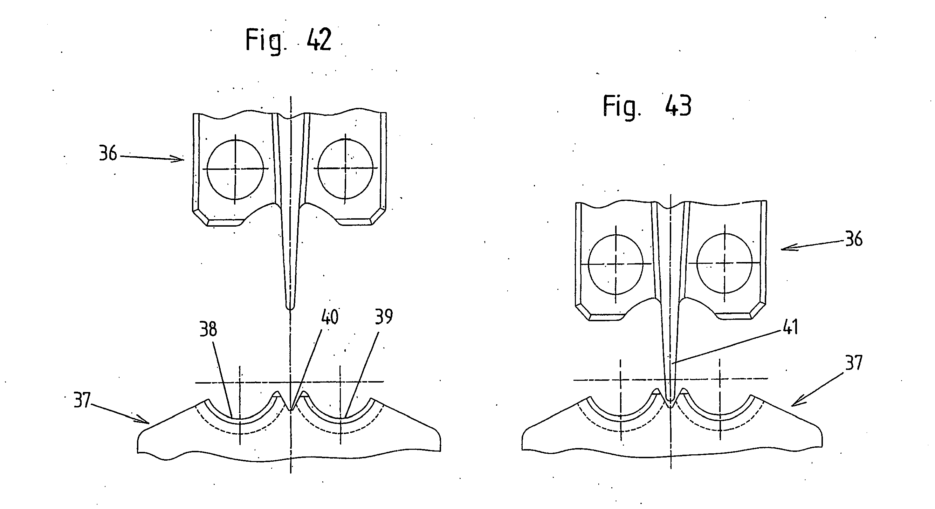

Nach dem weiter unten beschriebenen Balgen erfolgt das Falten der beiden Teilschalen um eine zwischen ihnen sich befindende parallel zur Längsrichtung der Teilschalen liegende Achse 19 (vgl. z.B. Fig. 28). Wesentliche Teile der Falteinrichtung sind schematisch in den Fig. 42 und 43 in Ansicht dargestellt. Wenn sich die aus Fig. 41 ersichtliche Presseinheit 35 nach unten bewegt, so nimmt sie den oberen Faltbacken ausgehend von seiner in Fig. 42 dargestellten Offenstellung mit, so dass sich dieser ebenfalls nach unten in Richtung seiner in Fig. 43 dargestellten Aktivstellung bewegt. Der untere Faltbacken 37 weist zwei nebeneinander angeordnete rinnenförmige Vertiefungen 38, 39 auf, die mit Querwellungen versehen sind und zur lagerichtigen Aufnahme der beiden Teilschalen 2, 3 dienen. Zwischen den beiden rinnenförmigen Vertiefungen 38, 39 befindet sich eine V-förmige Vertiefung 40, über welche im eingelegten Zustand der beiden Teilschalen 2, 3 der die beiden Teilschalen 2, 3 verbindende Abschnitt sich erstreckt. In diese V-förmige Vertiefung 40 taucht beim Absenken der Presseinheit 35 ein Biegezunge 41 des oberen Faltbackens 36 ein, wodurch die Faltung (=Biegung mit kleinem Radius) des vorgeformten Blechstreifens erreicht wird, um die zunächst voneinander entfernt gelegenen Längsränder 16, 17 der beiden Teilschalen 2, 3 zur Anlage zu bringen oder zumindest bis zu einem relativ geringen Abstand aufeinander zu zu bewegen, wie dies in Fig. 29 dargestellt ist. Eine solche Faltung bzw. Biegung mit kleinem Radius wird auch als Abkanten bezeichnet.

Beim Nachuntenbewegen der Presseinheit 35 werden mittels eines Stanzwerkzeuges auch die Verbindungsarme 29 abgetrennt.

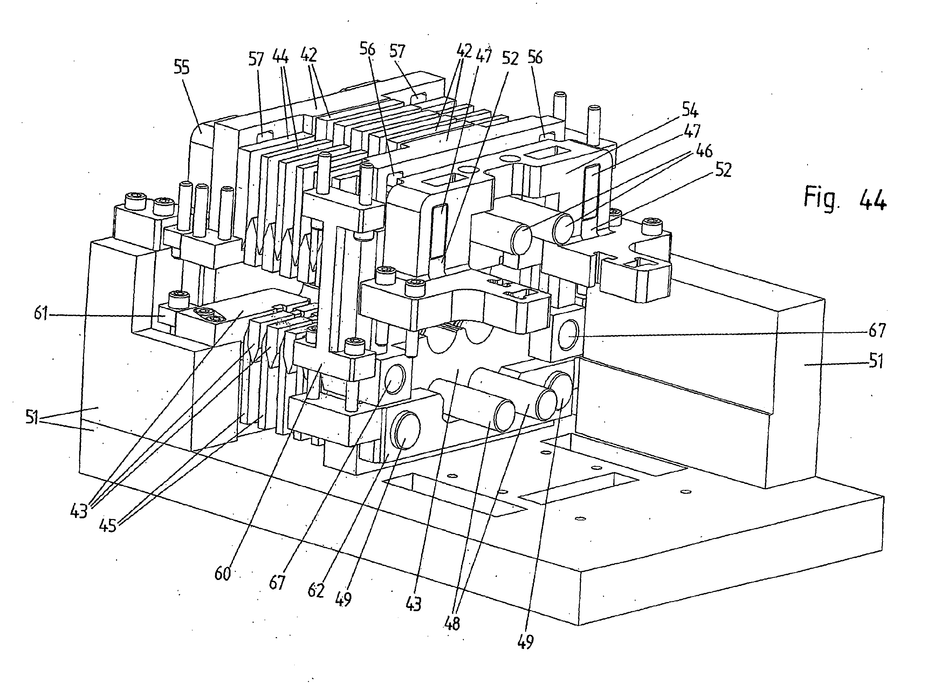

In den Fig. 44 bis 53 ist nur der Balgteil des Werkzeuges teilweise dargestellt. Dieser umfasst obere und untere Balgplatten 42, 43 sowie obere und untere Zwischenplatten 44, 45. Im geöffneten Zustand des Werkzeuges befinden sich die oberen Zwischenplatten 44 zwischen den oberen Balgplatten 42 und halten diese auf Abstand und befinden sich weiters die unteren Zwischenplatten 45 zwischen den unteren Balgplatten 43 und halten diese auf Abstand. Im vollständig geschlossenen Zustand des Werkzeuges sind dagegen die oberen Zwischenplatten 44 aus den Zwischenräumen zwischen den oberen Balgplatten 42 und die unteren Zwischenplatten 45 aus den Zwischenräumen zwischen den unteren Balgplatten 43 herausgefahren, so dass die Balgplatten 42, 43 gegenüber der Offenstellung des Werkzeuges achsial zusammengefahren sind und vorzugsweise unmittelbar aneinander anliegen, wobei ein Anlagedruck ausgeübt wird.

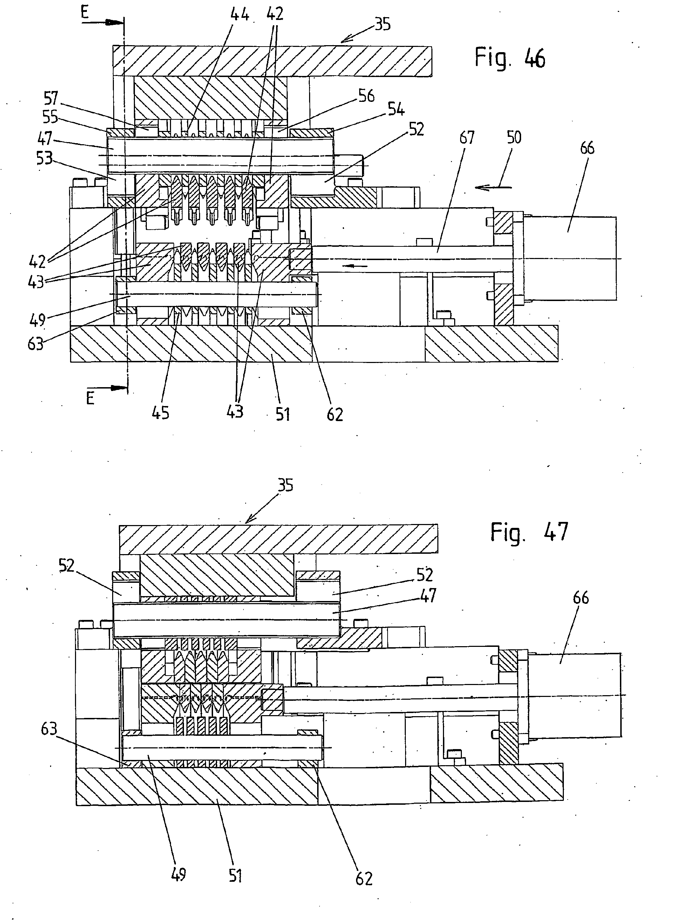

Um dies zu ermöglichen müssen die Balgplatten 42, 43, abgesehen von den in den Fig. 46 bis 49 ganz links dargestellten hintersten Balgplatten 42, 43, und die Zwischenplatten 44, 45 in achsialer Richtung der Teilschalen 2, 3 verschiebbar gelagert sein. Die verschiebbaren oberen Balgplatten 42 sind auf den oberen Balgplatten-Führungsstangen 46, die oberen Zwischenplatten 44 auf den oberen Zwischenplatten-Führungsstangen 47, die verschiebbaren unteren Balgplatten 43 auf den unteren Balgplatten-Führungsstangen 48 und die unteren Zwischenplatten 45 auf den unteren Zwischenplatten-Führungsstangen 49 in achsialer Richtung der jeweiligen Führungsstange verschiebbar gelagert.

Die oberen Balgplatten 42 sind gegenüber dem Werkzeugrahmen 51 in der Höhe verschiebbar. Diese Verschiebung erfolgt durch Einwirkung der Presseinheit 35, wobei beim Hinunterfahren der Presseinheit 35 die Balgplatten 42 und die Balgplatten-Führungsstangen 46 gleichförmig nach unten gedrückt werden. Über eine erste Phase dieser Verschiebung folgen die oberen Zwischenplatten 44 den oberen Balgplatten 42 gleichförmig. Hierbei verschieben sich die oberen Zwischenplatten-Führungsstangen 47 in Langlöchern 52, 53 der werkzeugrahmenfesten vorderen und hinteren Joche 54, 55 nach unten, bis sie die unteren Enden dieser Langlöcher 52, 53 erreichen. In der weiteren Folge der Verschiebung der oberen Balgplatten 42 nach unten kann keine weitere Verschiebung der oberen Zwischenplatten 44 mehr erfolgen und die oberen Zwischenplatten-Führungsstangen 47 bewegen sich in den Langlöchern 56, 57 der vordersten und hintersten oberen Balgplatte 42, durch welche die oberen Zwischenplatten-Führungsstangen 47 ragen nach oben. Weiters gleiten bei dieser fortgesetzten Bewegung der oberen Balgplatten 42 nach unten keilförmige Abschnitte 58 der oberen Balgplatten 42 an keilförmigen Abschnitten 59 der oberen Zwischenplatten 44 ab, wodurch die oberen Balgplatten 42 kontinuierlich zusammengedrückt werden können.

Nach der zuvor beschriebenen ersten Phase der vertikalen Verschiebung der oberen Balgplatten 42 nach unten kommen weiters Andrückstücke 60, 61 der Presseinheit 35 zur Anlage an Querstücke 62, 63, an denen die unteren Zwischenplatten-Führungsstangen 49 befestigt sind. In der weiteren Folge des Hinunterfahrens der Presseinheit 35 werden diese unteren Querstücke 62, 63 und mit diesen die unteren Zwischenplatten 45 nach unten verschoben, so dass keilförmige Abschnitte 65 der unteren Zwischenplatten 45 über keilförmige Abschnitte 64 der unteren Balgplatten 43 abgleiten und die unteren Balgplatten 43 synchron zu den oberen Balgplatten 42 zusammengedrückt werden können.

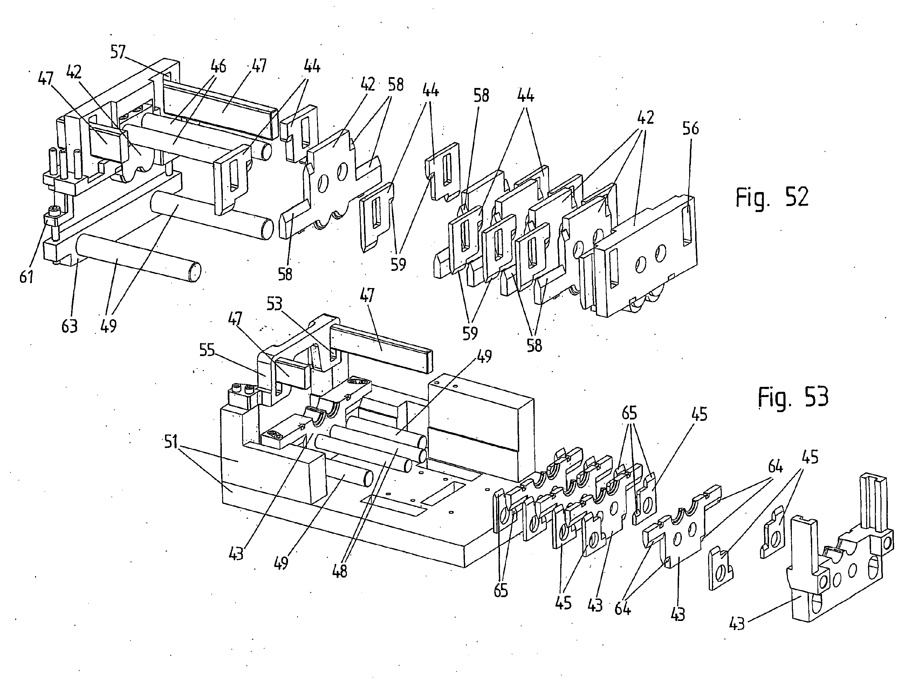

Zum Zusammendrücken der oberen und unteren Balgplatten 42, 43 dienen Kolben-Zylinder-Einheiten 66, deren Kolbenstangen 67 die Balgplatten 42, 43 zusammendrücken, und zwar in die Richtung 50 des Zusammenfahrens der Balgplatten 42, 43 welche parallel zur Längsrichtung der im Balgteil des Werkzeuges angeordneten Teilschalen 2, 3 ausgerichtet ist. Die Kolbenstangen 67 greifen an der vordersten, in Fig. 53 ganz rechts dargestellten Balgplatte 43 an und mit dieser ist über eine Höhenführung die vorderste, in Fig. 52 ganz rechts dargestellte Balgplatte 42 verbunden, die über diese Führung ebenfalls durch die Kolbenstangen 67 mit einer Presskraft beaufschlagt wird.

Die Kolben-Zylinder-Einheiten 66 werden auch in der Offenstellung mit einem geringerem Druck beaufschlagt, der die Zwischenplatten 44, 45 gleitbereit in Position hält.

Die vorgeformten Teilschalen 2, 3 werden bei offenem Werkzeug auf die unteren Balgplatten 43 aufgelegt, wobei diese unteren Balgplatten jeweils in ein Wellental 7 der Wellungen 4, 5 eingreifen. Die oberen Balgplatten 42 werden mittels der Presseinheit 35 hinuntergefahren, bis sie in die zwischen den Wellentälern 7 liegenden Wellenberge 6 eingreifen (dies entspricht der zuvor beschriebenen ersten Phase). In der Folge werden die oberen und unteren Balgplatten 42, 43 in achsialer Richtung der Teilschalen 2, 3 zusammengefahren, unter Auffaltung der Wellungen 4, 5 unter Vergrößerung der Wellenberge 6.

Der Vorteil dieses Balgens gegenüber einem Tiefziehprozess besteht in den geringeren Umformgraden des Blechs bei der Ausbildung der Wellungen 4, 5. Auch Glühprozesse können dadurch evtl. vermieden werden.

Für das als Ausgangsmaterial dienende Blech können beispielsweise unterschiedliche Stahlqualitäten, nicht rostende Stähle, Alulegierungen oder Messing verwendet werden. Ein Oberflächenschutz des Blechs kann je nach Einbauort notwendig sein.

Die Verbindungsnähte 20 können radial innerhalb der äußeren Oberflächen der Wellenberge 6 liegen, ebenso die äußere Oberfläche des Biegerückens 21. Die Ausbildung von runden Anschlussstutzen beidseitig des gewellten Bereichs ist wie beschrieben möglich.

Unterschiedliche Modifikationen der beschriebenen Ausführungsbeispiele sind denkbar und möglich ohne den Bereich der Erfindung zu verlassen. So wäre es z.B. möglich, zwei Teilschalen mit vorgeformten Wellungen geringer Amplituden auszubilden (z.B. durch Prägeverfahren) und nach der Verbindung der zusammengesetzten Teilschalen die Wellungen durch ein geführtes achsiales Komprimieren des vorgeformten Rohrs aufzufalten.

Denkbar und möglich wäre es beispielsweise auch, die rinnenförmigen Vertiefungen und die Wellungen gleichzeitig beispielsweise durch Tiefziehverfahren auszubilden.

Anstelle einer Ausbildung mit zwei Halbschalen, wie dies in den Figuren dargestellt ist, die sich jeweils über 180° des Umfangs des Wellrohrs erstrecken, könnten auch drei Drittelschalen ausgebildet werden, die sich jeweils über 120° des Umfangs erstrecken und um zwei Achsen 19 gebogen werden, wodurch jeweils ein Biegerücken 21 ausgebildet wird, und entlang einer Verbindungsnaht miteinander verbunden werden. Auch drei separate Teilschalen könnten ausgebildet werden, die über drei Verbindungsnähte verbunden werden. Auch eine Ausbildung mit mehr als drei Teilschalen und entsprechenden Verbindungsnähten und evtl. Biegerücken ist denkbar und möglich.

Die Teilschalen erstrecken sich im fertiggestellten Zustand des Wellrohrs jeweils über einen Teil der Umfangserstreckung des Wellrohrs.

Grundsätzlich denkbar und möglich wäre es auch, mindestens zwei Teilschalen in einem gemeinsamen Blechteil auszubilden, welches im weiteren Verlauf um eine parallel zur Längserstreckung der beiden Teilschalen verlaufende Achse gebogen wird und in mindestens einem weiteren Blechteil mindestens eine weitere, zunächst getrennte Teilschale auszubilden, die im weiteren Verfahrensverlauf mit den im anderen Blechteil ausgebildeten Teilschalen über Verbindungsnähte verbunden wird.

### Legende zu den Hinweisziffern:

- 1: Blechteil
- 2: Teilschale
- 3: Teilschale
- 4: Wellungen
- 5: Wellungen
- 6: Wellenberg
- 7: Wellental
- 8: unteres Formteil
- 9: oberes Formteil
- 10: Niederhalteleiste
- 11: Öffnung
- 12: Öffnung
- 13: Seitenteil
- 14: Seitenteil
- 15: Öffnung
- 16: Längsrand
- 17: Längsrand
- 18: Ausnehmung
- 19: Achse
- 20: Verbindungsnaht
- 21: Biegerücken
- 22: Öffnung
- 23: Ausnehmung
- 24: Ausnehmung
- 25: Längsrichtung
- 26: Querrand
- 27: Querrand
- 28: Blechstreifen
- 29: Verbindungsarm
- 30: Verbindungssteg
- 31: Halteteil
- 32: Teil
- 33: Lasche
- 34: Lasche
- 35: Presseinheit
- 36: oberer Faltbacken
- 37: unterer Faltbacken
- 38: Vertiefung
- 39: Vertiefung
- 40: Vertiefung
- 41: Biegezunge
- 42: obere Balgplatte
- 43: untere Balgplatte
- 44: obere Zwischenplatte
- 45: untere Zwischenplatte
- 46: obere Balgplatten-Führungsstange
- 47: obere Zwischenplatten-Führungsstange
- 48: untere Balgplatten-Führungsstange
- 49: untere Zwischenplatten-Führungsstange
- 50: Richtung
- 51: Werkzeugrahmen
- 52: Langloch
- 53: Langloch
- 54: vorderes Joch
- 55: hinteres Joch
- 56: Langloch
- 57: Langloch
- 58: keilförmiger Abschnitt
- 59: keilförmiger Abschnitt
- 60: Andrückstück
- 61: Andrückstück
- 62: Querstück
- 63: Querstück
- 64: keilförmiger Abschnitt
- 65: keilförmiger Abschnitt
- 66: Kolben-Zylinder-Einheit
- 67: Kolbenstange
- 68: Lasche

## Patentansprüche

1. Verfahren zur Herstellung eines in Form eines Wellrohrs ausgebildeten deformierbaren Elements einer Lenkspindel für ein Kraftfahrzeug, wobei das Wellrohr mit Öffnungen (11, 22) versehen ist, die die Wand des Wellrohrs durchsetzen, **dadurch gekennzeichnet, dass** aus ebenem Blech mindestens zwei jeweils in eine Längsrichtung verlaufende Teilschalen (2, 3) ausgebildet werden, die mit quer zu ihren Längsrichtungen ausgerichteten Wellungen (4, 5) versehen sind, wobei die Teilschalen (2, 3) in einem einzelnen Blechteil (1) längs nebeneinander angeordnet sind oder separate Teile sind, und dass im Fall einer Ausbildung mit mindestens zwei in einem gemeinsamen Blechteil (1) nebeneinander angeordneten Teilschalen das vorgeformte Blechteil (1) im Bereich zwischen den beiden oder zwei jeweiligen Teilschalen (2, 3) um eine parallel zu den Längsrichtungen der Teilschalen (2, 3) liegende Achse (19) gefaltet oder gebogen wird und freie Längsränder der Teilschalen (2, 3) zur gegenseitigen Anlage gebracht und miteinander verbunden werden, oder im Fall einer Ausbildung der Teilschalen (2, 3) in Form von separaten Teilen die separaten Teilschalen (2, 3) mit ihren Längsrändern (16, 17) aneinandergelegt und die Längsränder (16, 17) miteinander verbunden werden, wobei zumindest einer der beiden in gegenseitige Anlage kommenden Längsränder (16, 17) der Teilschalen (2, 3) mit einer Reihe von in Längsrichtung der Teilschalen (2, 3) voneinander beabstandeten Ausnehmungen (18) versehen ist und durch Verbindung von zwischen den Ausnehmungen (18) liegenden Abschnitten dieses Längsrandes (16, 17) mit dem anderen Längsrand (16, 17) im Verbindungsbereich der beiden Längsränder (16, 17) eine Reihe von in Längsrichtung des Wellrohrs beabstandeten Öffnungen (22) durch den Mantel des Wellrohrs gebildet wird.

2. Verfahren nach Anspruch 1, **dadurch gekennzeichnet, dass** zur Ausbildung der mit quer zu ihren Längsrichtungen ausgerichteten Wellungen (4, 5) versehenen Teilschalen (2, 3) rinnenförmige Vertiefungen in ein gemeinsames ebenes Blechteil (1) oder in getrennte ebene Blechteile (1) eingebracht werden und dass die von den rinnenförmigen Vertiefungen gebildeten Teilschalen (2, 3) im weiteren Verfahrensverlauf in mindestens einem separaten Arbeitsschritt mit quer zu ihren Längsrichtungen ausgerichteten Wellungen (4, 5) versehen werden.

3. Verfahren nach Anspruch 1 oder Anspruch 2, **dadurch gekennzeichnet, dass** zur Verbindung der in gegenseitige Anlage gebrachten Längsränder (16, 17) der Teilschalen (2, 3) diese Längsränder (16, 17) miteinander verschweißt werden.

4. Verfahren nach einem der Ansprüche 1 bis 3, **dadurch gekennzeichnet, dass** die in gegenseitige Anlage kommenden Längsränder (16, 17) der Teilschalen (2, 3) mit Laschen (68) versehen werden, die im fertiggestellten Zustand des Wellrohrs nach außen abstehen und die zur Ausbildung einer Verbindungsnaht (20) miteinander verbunden sind, wobei diese Laschen (68) vorzugsweise nur in den Bereichen der Wellentäler (7) angeordnet sind.

5. Verfahren nach einem der Ansprüche 1 bis 4, **dadurch gekennzeichnet, dass** die Öffnungen (22) an den achsialen Stellen des Wellrohrs liegen, in denen die Wellenberge (6) angeordnet sind.

6. Verfahren nach einem der Ansprüche 1 bis 5, **dadurch gekennzeichnet, dass** im Fall einer Ausbildung mit mindestens zwei in einem gemeinsamen Blechteil (1) angeordneten Teilschalen (2, 3) das Blechteil (1) im Bereich zwischen den beiden oder zwei jeweiligen schon vorgeformten Teilschalen (2, 3) oder im Bereich zwischen den beiden oder zwei jeweiligen auszubildenden Teilschalen (2, 3) mit einer Reihe von in Längsrichtung der Teilschalen (2, 3) voneinander beabstandeten Öffnungen (11) versehen wird, welche im fertiggestellten Zustand des Wellrohrs eine Reihe von im Bereich eines Biegerückens (21) des Wellrohrs in Längsrichtung des Wellrohrs verlaufenden Öffnungen (11) bilden.

7. Verfahren nach Anspruch 6, **dadurch gekennzeichnet, dass** die Öffnungen (11) an denjenigen achsialen Stellen des Wellrohrs angeordnet sind, an denen sich die Wellenberge (6) befinden.

8. Verfahren nach einem der Ansprüche 1 bis 7, **dadurch gekennzeichnet, dass** die rinnenförmigen Vertiefungen durch Biegen des Blechteils (1) bzw. eines jeweiligen Blechteils (1) ausgebildet werden.

9. Verfahren nach einem der Ansprüche 1 bis 8, **dadurch gekennzeichnet, dass** die Ausbildung der Wellungen (4, 5) der Teilschalen (2, 3) mehrere Tiefziehschritte umfasst, in denen die Wellungen (4, 5) jeweils in ihrer Amplitude vergrößert werden.

10. Verfahren nach einem der Ansprüche 1 bis 9, **dadurch gekennzeichnet, dass** die Ausbildung der Wellungen (4, 5) der Teilschalen (2, 3) eine achsiale Komprimierung der mit vorgeformten Wellungen (4, 5) versehenen Teilschalen (2, 3) umfasst, bei denen die Amplituden der vorgeformten Wellungen vergrößert werden, wobei die Teilschalen (2, 3) in ihren Wellentälern (7) und Wellenbergen (6) von Balgplatten (42, 43) gefasst werden, welche unter Auffaltung der Wellungen (4, 5) achsial zusammengedrückt werden.

11. Verfahren nach einem der Ansprüche 1 bis 10, **dadurch gekennzeichnet, dass** als Teilschalen (2, 3) zwei Halbschalen ausgebildet werden.

## Claims

1. A method of producing a deformable element, in the form of a corrugated tube, of a steering spindle for a motor vehicle, wherein the corrugated tube is provided with openings (11, 22) passing through the wall of the corrugated tube, **characterised in that** at least two partial shells (2, 3) each running in a longitudinal direction are formed out of plane sheet-metal, which partial shells (2, 3) are provided with corrugations (4, 5) directed transversely to their longitudinal directions, wherein the partial shells (2, 3) are arranged longitudinally side by side in an individual sheet-metal part (1) or are separate parts, and **in that** in the case of a construction with at least two partial shells arranged side by side in a common sheet-metal part (1), the preformed sheet-metal part (1) is, in the region between the two or two specific partial shells (2, 3), folded or bent about an axis (19) lying parallel to the longitudinal directions of the partial shells (2, 3) and free longitudinal edges of the partial shells (2, 3) are brought into mutual contact and connected to one another, or in the case of a construction of the partial shells (2, 3) in the form of separate parts, the longitudinal edges (16, 17) of the separate partial shells (2, 3) are placed against one another and are connected to one another, wherein at least one of the two longitudinal edges (16, 17), coming into mutual contact, of the partial shells (2, 3) is provided with a series of cut outs (18) spaced apart in the longitudinal direction of the partial shells (2, 3) and a series of openings (22), spaced apart in the longitudinal direction of the corrugated tube, through the casing of the corrugated tube is formed through the connection of portions, lying between the cut outs (18), of this longitudinal edge (16, 17) to the other longitudinal edge (16, 17) in the connection region of the two longitudinal edges (16, 17).

2. A method according to claim 1, **characterised in that** to construct the partial shells (2, 3) provided with corrugations (4, 5) directed transversely to their longitudinal directions, channel-shaped depressions are made in a common plane sheet-metal part (1) or in separate plane sheet-metal parts (1), and **in that** in the further course of the method, the partial shells (2, 3) formed by the channel-shaped depressions are provided in at least one separate working step with corrugations (4, 5) directed transversely to their longitudinal directions.

3. A method according to claim 1 or claim 2, **characterised in that** to connect the longitudinal edges (16, 17), brought into mutual contact, of the partial shells (2, 3), these longitudinal edges (16, 17) are welded together.

4. A method according to any one of claims 1 to 3, **characterised in that** the longitudinal edges (16, 17), coming into mutual contact, of the partial shells (2, 3) are provided with lugs (68) which project outwards in the finished state of the corrugated tube and which are connected to one another to form a connecting seam (20), wherein these lugs (68) are preferably only arranged in the regions of the corrugation troughs (7).

5. A method according to any one of claims 1 to 4, **characterised in that** the openings (22) lie at the corrugated-tube axial sites at which the corrugation crests (6) are arranged.

6. A method according to any one of claims 1 to 5, **characterised in that** in the case of a construction with at least two partial shells (2, 3) arranged in a common sheet-metal part (1), the sheet-metal part (1) is provided with a series of openings (11), spaced apart in the longitudinal direction of the partial shells (2, 3), in the region between the two or two specific partial shells (2, 3) already pre-formed or in the region between the two or two specific partial shells (2, 3) to be constructed, these openings (11) forming a series of openings (11) which in the finished state of the corrugated tube run in the longitudinal direction of the corrugated tube, in the region of a bending ridge (21) of the corrugated tube.

7. A method according to claim 6, **characterised in that** the openings (11) are arranged at those axial sites of the corrugated tube at which the corrugation crests (6) are located.

8. A method according to any one of claims 1 to 7, **characterised in that** the channel-shaped depressions are formed by bending of the sheet-metal part (1) or a specific sheet-metal part (1).

9. A method according to any one of claims 1 to 8, **characterised in that** the formation of the corrugations (4, 5) of the partial shells (2, 3) comprises a plurality of deep-drawing steps in each of which the corrugations (4, 5) are increased in amplitude.

10. A method according to any one of claims 1 to 9, **characterised in that** the formation of the corrugations (4, 5) of the partial shells (2, 3) comprises an axial compression of the partial shells (2, 3) having pre-formed corrugations (4, 5) during which the amplitudes of the pre-formed corrugations are increased, wherein the partial shells (2, 3) are gripped in their corrugation troughs (7) and corrugation crests (6) by bellows plates (42, 43) which are pressed together axially accompanied by upwards folding of the corrugations (4, 5).

11. A method according to any one of claims 1 to 10, **characterised in that** two half shells are formed as partial shells (2, 3).

## Revendications

1. °) Procédé de fabrication d'un élément déformable, réalisé en forme de tube ondulé pour une colonne de direction d'un véhicule automobile selon lequel, on munit le tube ondulé d'orifices (11, 22) traversant la paroi du tube ondulé,
**caractérisé en ce qu'**
on réalise dans une tôle plane au moins deux coquilles partielles (2, 3) s'étendant chaque fois dans une direction longitudinale, ces coquilles ayant des ondulations (4, 5) dirigées transversalement à leur direction longitudinale,
les coquilles partielles (2, 3) étant juxtaposées dans une seule pièce en tôle (1), l'une long de l'autre ou sous forme de pièces séparées, et
dans le cas d'une réalisation avec au moins deux coquilles partielles juxtaposées, réalisées dans une même pièce de tôle (1), on plie ou on cintre la pièce de tôle (1) préformée dans une zone entre les deux ou chaque fois deux coquilles partielles (2, 3) respectives, autour d'un axe (19) parallèle à la direction longitudinale des coquilles partielles (2, 3), et on met en appui l'un contre l'autre les bords longitudinaux libres des coquilles partielles (2, 3) et on les relie, ou
dans le cas d'une réalisation des coquilles partielles (2, 3) sous la forme de pièces séparées, on juxtapose les coquilles partielles séparées (2, 3) par leur bord longitudinal (16, 17) et on relie entre eux les bords longitudinaux (16, 17), et
au moins l'un des deux bords longitudinaux (16, 17) des coquilles partielles (2, 3) qui viennent réciproquement en appui, est muni d'une série de découpes (18) écartées les unes des autres dans la direction longitudinale des coquilles partielles (2, 3), et
en reliant les segments de ce bord longitudinal (16, 17) entre les découpes (18) avec l'autre bord longitudinal (16, 17) dans la zone de liaison des deux bords longitudinaux (16, 17), on forme une série d'ouvertures (22) écartées dans la direction longitudinale du tube ondulé, et qui traversent l'enveloppe du tube ondulé.

2. °) Procédé selon la revendication 1,
**caractérisé en ce que**
pour réaliser les coquilles partielles (2, 3) munies d'ondulations (4, 5), dirigées transversalement à leur direction longitudinale, on réalise des cavités en forme de goulottes, dans une pièce de tôle plane (1), commune, ou dans des pièces de tôle planes (1), distinctes, et
les coquilles partielles (2, 3) réalisées par les cavités en forme de goulottes recevront des ondulations (4, 5) dirigées transversalement à leur direction longitudinale, au cours de la suite du procédé, au cours d'au moins une étape de travail distincte.

3. °) Procédé selon la revendication 1 ou 2,
**caractérisé en ce que**
pour relier les bords longitudinaux (16, 17) des coquilles partielles (2, 3), mis en appui l'un contre l'autre, on soude entre eux les bords longitudinaux (16, 17).

4. °) Procédé selon les revendications 1 à 3,
**caractérisé en ce qu'**
on munit les bords longitudinaux (16, 17) des coquilles partielles (2, 3) mis en appui l'un par rapport à l'autre, de pattes (68) en saillie sur le tube ondulé dans son état terminé, et reliées pour former un cordon de liaison (20),
les pattes (68) se trouvant de préférence seulement dans la zone des creux (7) des ondulations.

5. °) Procédé selon les revendications 1 à 4,
**caractérisé en ce que**
les ouvertures (22) se situent aux emplacements axiaux du tube ondulé ou se trouvent les sommets (6) des ondulations.

6. °) Procédé selon les revendications 1 à 5,
**caractérisé en ce que**
dans le cas d'une réalisation d'au moins deux coquilles partielles (2, 3) dans une pièce de tôle (1), commune, on munit la pièce de tôle (1), dans la zone entre les deux coquilles partielles (2, 3) le cas échéant déjà préformées, ou encore dans la zone entre les deux coquilles partielles (2, 3) ou deux coquilles partielles qui restent à former, une série d'ouvertures (11) écartées les unes des autres dans la direction longitudinale des coquilles partielles (2, 3), et à l'état terminé du tube ondulé, ces ouvertures forment une série d'orifices (11) dans la direction longitudinale du tube ondulé au niveau du dos cintré (21) du tube ondulé.

7. °) Procédé selon la revendication 6,
**caractérisé en ce que**
les ouvertures (11) se trouvent aux emplacements axiaux respectifs du tube ondulé à l'endroit des sommets (6) des ondulations.

8. °) Procédé selon les revendications 1 à 7,
**caractérisé en ce que**
les cavités de forme annulaire sont réalisées par cintrage de la pièce de tôle (1) ou de chaque pièce de tôle (1).

9. °) Procédé selon les revendications 1 à 8,
**caractérisé en ce que**
la réalisation des ondulations (4, 5) des pièces de tôle (2, 3) se fait en plusieurs étapes d'emboutissage profond au cours desquelles on augmente l'amplitude respective des ondulations (4, 5).

10. °) Procédé selon les revendications 1 à 9,
**caractérisé en ce que**
la formation des ondulations (4, 5) des coquilles partielles (2, 3) comprend la compression axiale des coquilles partielles (2, 3) munies d'ondulations (4, 5) préformées, et pour lesquelles il faut augmenter l'amplitude des ondulations préformées,
les coquilles partielles (2, 3) étant prises par le creux (7) des ondulations et les sommets (6) des ondulations, par des plaques à soufflet (42, 43)
qui sont comprimées l'une contre l'autre par déploiement des ondulations (4, 5).

11. °) Procédé selon les revendications 1 à 10,
**caractérisé en ce que**
les coquilles partielles (2, 3) sont deux demi-coquilles.
